# EUROPEAN PATENT SPECIFICATION

(11) **EP 4 421 605 B1**
(45) Date of publication and mention of the grant of the patent: **01.07.2026**
(21) Application number: 22899737.5
(22) Date of filing: 02.03.2022
(51) Int. Cl.: G06F 3/0488, G06F 3/04817, G06F 3/0481, G06F 3/0482, G06F 3/04886

(54) **APPLICATION RECOMMENDATION METHOD AND ELECTRONIC DEVICE**
ANWENDUNGSEMPFEHLUNGSVERFAHREN UND ELEKTRONISCHE VORRICHTUNG
PROCÉDÉ DE RECOMMANDATION D'APPLICATION ET DISPOSITIF ÉLECTRONIQUE

(30) Priority: 03.12.2021 CN 202111471208; 31.12.2021 CN 202111678637
(43) Date of publication of application: 28.08.2024
(60) Divisional application: 26180677.2
(73) Proprietor: Honor Device Co., Ltd., Shenzhen, Guangdong 518040 (CN)
(72) Inventor: LIU, Shicong, Shenzhen, Guangdong 518040 (CN); REN, Jie, Shenzhen, Guangdong 518040 (CN); YANG, Liu, Shenzhen, Guangdong 518040 (CN)
(74) Representative: Gill Jennings & Every LLP
(86) International application number: PCT/CN2022/078901
(87) International publication number: WO 2023/097914

(56) References cited:
- WO-A1-2021/043171
- WO-A1-2021/052279
- CN-A- 110 494 835
- CN-A- 110 515 687
- CN-A- 111 061 419
- CN-A- 111 770 370
- US-A1- 2013 222 321
- US-A1- 2019 215 452
- US-A1- 2020 241 740

## Description

This application claims priority to Chinese Patent Application No. 202111471208.8, filed with the China National Intellectual Property Administration on December 3, 2021 and entitled "DISPLAY SCREEN WINDOW SWITCHING METHOD AND ELECTRONIC DEVICE", and to Chinese Patent Application No. 202111678637.2, filed with the China National Intellectual Property Administration on December 31, 2021 and entitled "APPLICATION RECOMMENDATION METHOD AND ELECTRONIC DEVICE".

### TECHNICAL FIELD

This application relates to the field of terminal technologies, and in particular, to an application recommendation method and an electronic device.

### BACKGROUND

With continuous development of electronic devices and screen technologies, more electronic devices having a display screen are used in daily life and work of people. A larger display screen of an electronic device can provide richer information for a user and bring better use experience to the user.

Currently, when a user uses an electronic device (for example, a device with a foldable screen, a tablet computer, or a large-screen mobile phone) having a large display screen, the electronic device usually supports a split-screen function. However, the split-screen function provided by the electronic device is not intelligent enough. For example, an operation of starting screen splitting is complex, and a function that is provided for the user and that is for searching for an application (application, APP) for which the screen is to be split is not convenient enough when being used. As a result, use experience of the user is affected. Other previously proposed arrangements are disclosed in US 2013/222321 A1, WO 2021/052279 A1, US 2019/215452 A1, and WO 2021/043171 A1.

### SUMMARY

This application provides an application recommendation method and an electronic device, to optimize a split-screen function provided by the electronic device. Aspects of the present invention are defined in the appended set of claims.

### BRIEF DESCRIPTION OF DRAWINGS

FIG. 1 is a schematic diagram of interfaces of a full-screen window and a split-screen window according to an embodiment of this application;
FIG. 2 is a schematic diagram of a split-screen control according to an embodiment of this application;
FIG. 3A, FIG. 3B, FIG. 3C, and FIG. 3D are a schematic diagram 1 of interfaces of applications in an application recommendation method according to an embodiment of this application;
FIG. 4 is a schematic diagram of application split-screen pairs corresponding to various scenarios in an application recommendation method according to an embodiment of this application;
FIG. 5 is a schematic diagram of possible application split-screen pairs in an application recommendation method according to an embodiment of this application;
FIG. 6 is a schematic flowchart of an application recommendation method according to an embodiment of this application;
FIG. 7A, FIG. 7B, FIG. 7C, and FIG. 7D are a schematic diagram 2 of interfaces of applications in an application recommendation method according to an embodiment of this application;
FIG. 8A, FIG. 8B, FIG. 8C, and FIG. 8D are a schematic diagram 3 of interfaces of applications in an application recommendation method according to an embodiment of this application;
FIG. 9A, FIG. 9B, FIG. 9C, and FIG. 9D are a schematic diagram 4 of interfaces of applications in an application recommendation method according to an embodiment of this application;
FIG. 10A, FIG. 10B, FIG. 10C, and FIG. 10D are a schematic diagram 5 of interfaces of applications in an application recommendation method according to an embodiment of this application;
FIG. 11A, FIG. 11B, FIG. 11C, and FIG. 11D are a schematic diagram 6 of interfaces of applications in an application recommendation method according to an embodiment of this application;
FIG. 12 is a schematic diagram of an architecture of an operating system applied to an application recommendation method according to an embodiment of this application;
FIG. 13 is a schematic flowchart of interaction between modules in an application recommendation method according to an embodiment of this application;
FIG. 14 is a schematic diagram of a structure of an application recommendation apparatus according to an embodiment of this application; and
FIG. 15 is a schematic diagram of a structure of an electronic device according to an embodiment of this application.

### DESCRIPTION OF EMBODIMENTS

To make objects, technical solutions, and advantages of embodiments of this application clearer, the technical solutions in the embodiments of this application are clearly and completely described below with reference to the accompanying drawings of the embodiments of this application. It is clear that the described embodiments are a part of the embodiments of this application, rather than all of the embodiments. Based on the embodiments of this application, all other embodiments obtained by a person of ordinary skill in the art without creative efforts shall fall within the protection scope of this application.

The term "and/or" in this specification is an association relationship for describing associated objects, and indicates three types of relationships. For example, A and/or B may indicate three cases: only A exists, both A and B exist, and only B exists. The symbol "/" in this specification indicates that a relationship between associated objects is an alternative relationship. For example, A/B indicates A or B.

The terms "first", "second", and the like in descriptions and claims in this specification are for distinguishing between different objects, instead of describing a particular sequence of the objects. For example, a first split-screen pair, a second split-screen pair, and the like are for distinguishing between different split-screen pairs, instead of describing a particular sequence of the split-screen pairs.

In the embodiments of this application, words such as "exemplary" or "for example" are for indicating an example, instance, or illustration. Any embodiment or design solution described as "exemplary" or "for example" in the embodiments of this application should not be explained to be more preferred or have more advantages that another embodiment or design solution. Specifically, use of the words such as "exemplary" or "for example" is intended to represent a related concept in a specific manner.

In descriptions of the embodiments of this application, unless otherwise specified, "plurality of" means two or more. For example, a plurality of processing units mean two or more processing units, and a plurality of elements mean two or more elements.

Currently, a split-screen function provided by an electronic device is not intelligent enough, and an operation of starting screen splitting and replacing a split-screen window is complex. As a result, use experience of a user is affected. For example, in a currently popular split-screen launching solution, after starting an application in a mobile phone, a user may swipe, on a left side or a right side of a screen of the mobile phone, the screen from outside to inside and pause, to invoke a multi-window application bar. The multi-window application bar displays icons of all applications installed in the mobile phone. The user may search for a split-screen application in the multi-window application bar. The user may touch, hold, and drag an application icon in the application bar, to start screen splitting.

However, in the foregoing split-screen manner, it is difficult to satisfy a scenario requirement of the user for quickly finding an application for coordinate screen splitting with a foreground application. A reason is that the multi-window application bar displays the icons of all the applications in the electronic device, and consequently, there are many application icons. When the user searches for an application expected by the user for screen splitting, long duration is usually required. As a result, convenience is not enough.

In view of this, the embodiments of this application provide an application recommendation method and an electronic device. In some embodiments of this application, an association relationship between applications with high relevance may be established based on user historical behavior data, to form split-screen pair information. When a user triggers split-screen display on an interface of an application, the electronic device may display a split-screen recommender, to recommend, to the user based on the split-screen pair information, one or more applications related to a foreground application (namely, a currently running application), for the user to select. Because the recommended application is an application that is highly related to the foreground application, in other words, an application that is expected by the user to be displayed together with the foreground application through screen splitting is included, it is convenient for the user to quickly find an application for which a screen is to be split. In the solution provided in some embodiments of this application, the scenario requirement of the user for quickly finding the application for coordinate screen splitting with the foreground application can be satisfied, so that convenience of using the split-screen function by the user is greatly improved.

It should be noted that the application recommendation method provided in the embodiments of this application may be applied not only to an electronic device including a foldable screen, but also to an electronic device including a conventional display screen (namely, a display screen that does not support screen folding), for example, a mobile phone or a tablet computer. Details may be determined based on an actual use requirement, and are not limited in the embodiments of this application.

It may be understood that the application recommendation method provided in the embodiments of this application may be applied to a process of starting screen splitting, may be applied to a process of replacing a split-screen window, or may be applied to another possible split-screen use scenario. The process of starting screen splitting may be a process in which a user operates in a full-screen window and triggers switching to two split-screen windows. The process of replacing a split-screen window may be a process in which a user operates in a split-screen window and triggers replacing an application interface in the split-screen window with another application interface. An example in which the application recommendation method is applied to a scenario that is from a full screen to a split screen is used for example description below.

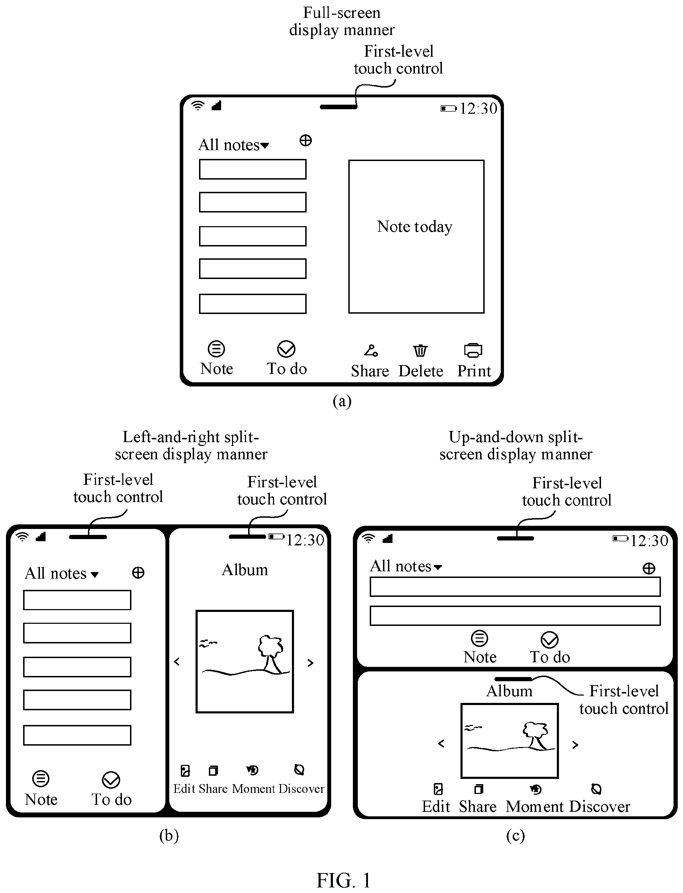

A schematic diagram of interfaces of a full-screen window and a split-screen window provided in the embodiments of this application are described below with reference to FIG. 1.

As shown in (a) in FIG. 1, a display screen of an electronic device performs display in a full-screen display manner. The display screen presents a display window. The window may display content on an interface, for example, display content on a desktop interface or an interface of an application. As shown in (b) in FIG. 1, the display screen of the electronic device performs display in a left-and-right split-screen display manner. The display screen is divided into two display windows (namely, a left display area and a right display area), respectively for displaying content on different interfaces. As shown in (c) in FIG. 1, a display screen of an electronic device performs display in an up-and-down split-screen display manner. The display screen is divided into two display windows (namely, an upper display area and a lower display area), respectively for displaying content on different interfaces.

For ease of description, the two foregoing display windows may be referred to as a first split-screen window and a second split-screen window. An application in the first split-screen window and an application in the second split-screen window may for a split-screen combination (which is alternatively referred to as a split-screen application combination) or a split-screen pair (which is alternatively referred to as an application split-screen pair or a split-screen application pair).

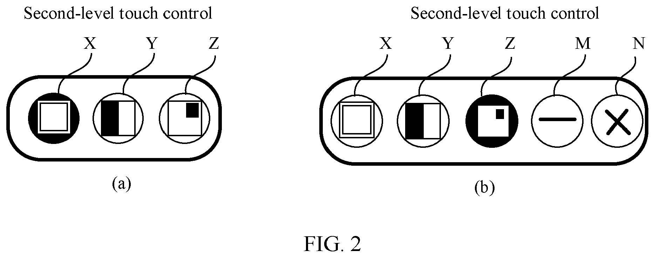

Related controls that are for triggering split-screen display and that are provided in the embodiments of this application are described below with reference to FIG. 1 and FIG. 2.

As shown in (a), (b), and (c) in FIG. 1, the full-screen window for displaying the interface of the application and an upper area of each split-screen window each display a first-level touch control. The first-level touch control may be for invoking a second-level touch control such as a split-screen control. The first-level touch control may also be referred to as a status bar (bar) or the first-level touch control.

In this embodiment of this application, a user may operate (for example, a tapping operation or a swiping operation) on the first-level touch control, to invoke second-level touch controls such as a full-screen control X, a split-screen control Y, and a floating-window control Z shown in (a) in FIG. 2, or invoke second-level touch controls such as a full-screen control X, a split-screen control Y, a floating-window control Z, a minimization control M, and a window-closing control N shown in (b) in FIG. 2. It may be understood that FIG. 2 is an example illustration, and a quantity and forms of the shown controls are not limited in this embodiment of this application.

For example, if the user operates on the first-level touch control in the full-screen window, the second-level touch controls such as the full-screen control X, the split-screen control Y, and the floating-window control Z shown in (a) in FIG. 2 may be popped up in the full-screen window.

For another example, if the user operates on the first-level touch control in the first split-screen window, the second-level touch controls such as the full-screen control X, the split-screen control Y, the floating-window control Z, the minimization control M, and the window-closing control N shown in (b) in FIG. 2 may be popped up in the first split-screen window.

In an actual operation process, based on an actual use requirement, the user may select the full-screen control, to trigger the display screen to perform display in the full-screen display manner; or select the split-screen control to trigger the display screen to perform display in the split-screen display manner; or select the floating-window control to trigger the display screen to perform display in a floating-window display manner; or select the minimization control to trigger minimization of a current window; or select the window-closing control to trigger closing of the current window.

Optionally, in this embodiment of this application, in an initial phase (for example, when an application is started for first N times), the electronic device may display the first-level touch control in the display window by using a motion effect, to prompt the user that a display manner may be switched by invoking the second-level touch control such as the split-screen control through the entrance.

For example, when the application is started for first three times and displayed in the window, the first-level touch control in the window may flash for a time period (such as five seconds), to prompt the user that the user may attempt to operate the first-level touch control to further invoke the second-level touch controls such as the full-screen control, the split-screen control, and the floating-window control.

For example, after a quantity of times of flash prompt of the first-level touch control is greater than or equal to a quantity of times (such as five times), or when the application is started again after the electronic device detects that the user has operated on the first-level touch control, the first-level touch control in the window in which the application is located may no longer flash.

It needs to be noted that some applications support split-screen display, but some applications may not support split-screen display. For the application that supports split-screen display, a top area of a window in which an interface of the application is displayed may display the first-level touch control for the user to operate. For the application that does not support split-screen display, a window displaying an interface of the application does not display the first-level touch control.

It should be noted that neither of a display attribute (such as a display position, a display size, or a display style) of the split-screen control and a display attribute (such as a display position, a display size, or a display style) of the first-level touch control is not limited in this embodiment of this application. Specifically, the display attribute may be determined based on an actual use requirement, and are not limited in this embodiment of this application.

Alternatively, in this embodiment of this application, the split-screen control (such as Y shown in FIG. 2) for triggering split-screen display may alternatively be directly displayed in the full-screen window or the split-screen window, so that the split-screen operation is more convenient for the user.

The schematic diagram of the display window provided in the embodiments of this application, and the first-level touch control and the second-level touch control such as the split-screen control that are provided in the embodiments of this application are described above. The user may operate on the split-screen control, to trigger the electronic device to display the split-screen recommender (which may also be referred to as a split-screen selector or a split-screen launcher, and is specifically shown as a split-screen recommendation interface). The split-screen recommender may recommend, to the user, one or more applications related to a foreground application, for the user to select.

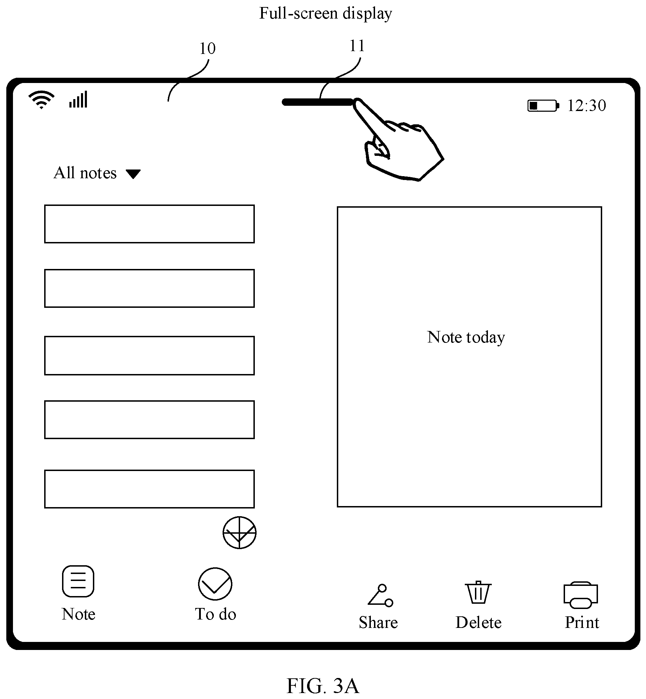

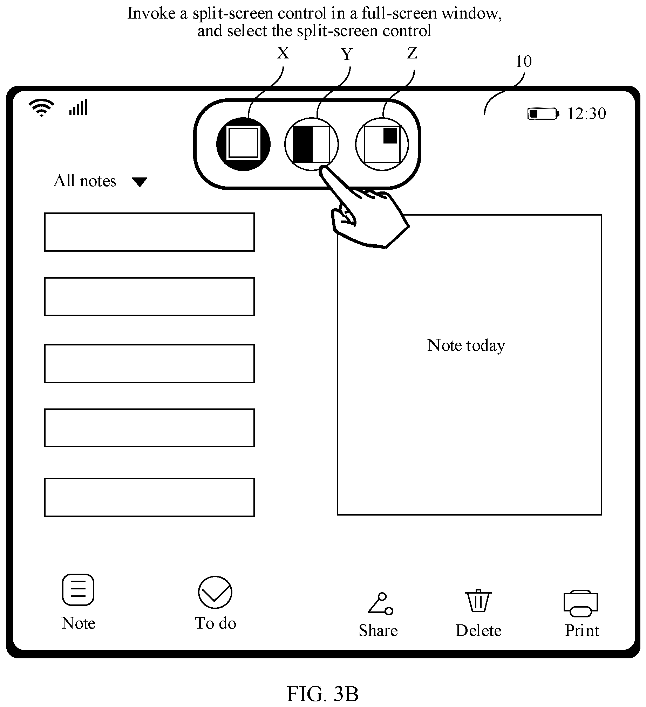

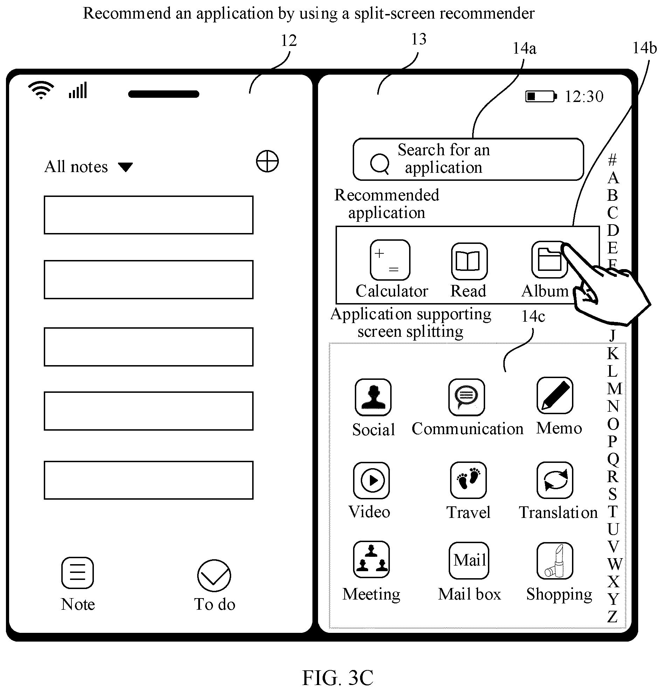

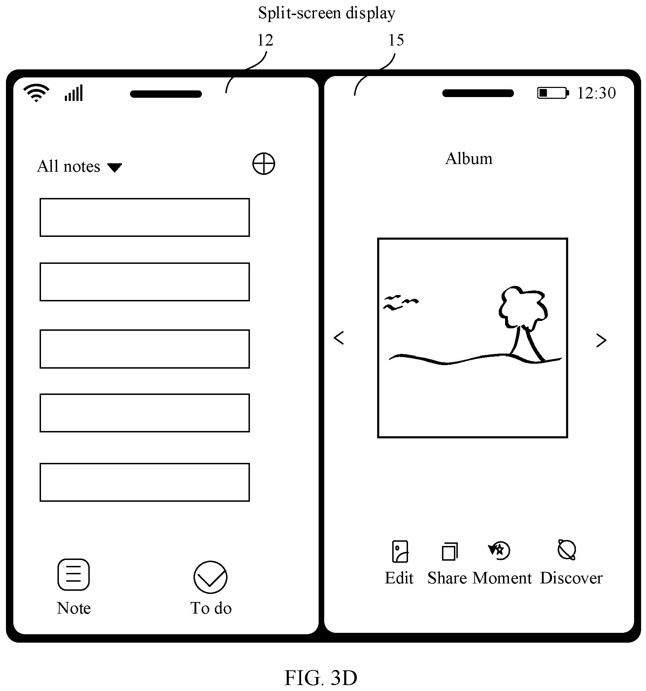

Implementing the application recommendation method provided in the embodiments of this application based on the split-screen recommender is described below with reference to FIG. 3 by using an example of an interface interaction process of switching from a full-screen window to a split-screen window. In the switching process, application of the first-level touch control, the split-screen control, and the split-screen recommender that are provided in the embodiments of this application is involved.

As shown in FIG. 3A, a display screen of an electronic device is in a full-screen display manner. A full-screen window 10 displays an interface of an application (such as a note APP). The full-screen window 10 displays a first-level touch control 11.

As shown in FIG. 3B, when the electronic device receives an operation of a user on the first-level touch control 11, the electronic device invokes a plurality of controls for switching a display manner of the screen, such as a full-screen control X, a split-screen control Y, and a floating-window control Z.

As shown in FIG. 3C, when the electronic device receives an operation of the user on the split-screen control Y, the electronic device may pop up a split-screen recommendation interface 13, and show, by using the split-screen recommendation interface 13, icons of a plurality of applications that can support screen splitting. A window 12 obtained by shrinking the full-screen window 10 and the split-screen recommendation interface 13 are simultaneously displayed.

In this embodiment of this application, as shown in FIG. 3C, the split-screen recommendation interface 13 may include a search bar 14a, a recommended application bar 14b, and a bar 14c of an application supporting screen splitting.

The search bar 14a is for searching for an application expected by the user for split-screen display. When the user enters, in the search bar 14a, a keyword of an application, an icon of the searched application may be displayed in the split-screen recommendation interface 13. Further, if the user taps the icon of the application, split-screen display of the foreground application and the searched application may be implemented.

The recommended application bar 14b is for display icons of a plurality of applications recommended based on the foreground application (such as the note APP). For example, icons of a calculator APP, a read APP, and an album APP are displayed in the recommended application bar 14b. Further, if the user taps an icon of an application in the recommended application bar 14b, split-screen display of the foreground application and the application selected by the user may be implemented.

It needs to be noted that all the applications in the recommended application bar 14b are applications associated with the foreground application (such as the note APP). In the solution of this application, the applications are determined based on split-screen pair information specific to the user, and the split-screen pair information specific to the user are obtained by learning user behavior data. The split-screen pair information specific to the user includes a split-screen pair and a corresponding scenario parameter. During actual implementation, when a split-screen requirement of the user is sensed, an application satisfying expectation of the user for split-screen display in a current scenario may be recommended based on the foreground application and the split-screen pair information obtained by learning the user behavior data. Specifically, a process of obtaining the split-screen pair information by learning the user behavior data, and when it is detected that the user has the split-screen requirement, recommending, based on the split-screen pair information and the foreground application, the application that satisfies a user requirement is described in detail below.

The bar 14c of the application supporting screen splitting is for displaying icons of all or a part of applications supporting screen splitting in the electronic device. Further, if the user taps an icon of an application in the application bar 14c, split-screen display of the foreground application and the application selected by the user may be implemented.

For example, when the electronic device receives an operation of the user on an application on the split-screen recommendation interface 13 (for example, tapping the icon of the album APP), as shown in FIG. 3D, the electronic device displays a split-screen window 12 and a split-screen window 15, displays the interface of the note APP in the first split-screen window 12, and displays an interface of the album APP in the second split-screen window 15.

According to the foregoing solution, when the electronic device displays a first application in full screen, in response to an operation of the user on the first-level touch control, the electronic device may quickly invoke the split-screen control. When the user taps the split-screen control to determine that split-screen display is required, the electronic device may display the split-screen recommendation interface (which is also referred to as a split-screen recommender or a split-screen launcher). The split-screen recommendation interface may display a plurality of applications (which are specifically shown as icons of the applications) recommended according to a current scenario and the first application, to help the user search for an application required by the user for screen splitting. Once the user selects an application, the display screen is triggered to be switched from full-screen display to split-screen display.

It can be usually learned from FIG. 3 that, in this embodiment of this application, when the user taps the split-screen control, the electronic device may first determine, as a recommended application, one or more applications based on the current scenario and the foreground application. The recommended application (which is specifically an icon of the application) is then displayed in the recommended application bar in the split-screen recommendation interface for the user. Because the recommended application may include an application expected by the user for split-screen display, it is convenient for the user to quickly find an application displayed together with the foreground application through screen splitting.

It should be noted that, in this embodiment of this application, if an application supports a split-screen display manner or function, the application may be displayed in the split-screen display manner. Optionally, a desktop interface may support the split-screen display manner or function.

An execution body of the application recommendation method provided in this embodiment of this application may be the electronic device, or may be a functional module and/or a functional entity that can implement the application recommendation method in the electronic device. In addition, the solution of this application may be implemented in a hardware and/or software manner, which may be specifically determined based on an actual use requirement. This is not limited in this embodiment of this application. The application recommendation method provided in this embodiment of this application is described below with reference to the accompanying drawings by using the electronic device as an example.

First, it needs to be noted that a split-screen recommendation policy provided in this application includes the following three recommendation manners.

Recommendation manner 1: The electronic device may pre-store a split-screen pair rule determined based on big data. When receiving an operation of triggering screen splitting by a user, the electronic device may recommend an application to the user based on a preset split-screen pair rule, for the user to select during screen splitting.

Recommendation manner 2: The electronic device may generate, based on user historical behavior data in advance, split-screen pair information specific to a user. When receiving an operation of triggering screen splitting by the user, the electronic device may recommend an application to the user based on the split-screen pair information specific to the user, for the user to select during screen splitting.

Recommendation manner 3: When an operation of triggering screen splitting by a user is received, if it is determined that current system time is within a time period corresponding to schedule or journey information of the user, or a current position is within a position range corresponding to the schedule or journey information of the user, a related APP corresponding to the schedule or journey information is recommended to the user, to prompt the user to select during screen splitting.

Optionally, corresponding priorities may be preset for the foregoing three recommendation manners. For example, a priority of the recommendation manner 3 is highest, a priority of the recommendation manner 2 is in the middle, and a priority of the recommendation manner 1 is lowest. Alternatively, the priority of the recommendation manner 2 is highest, the priority of the recommendation manner 3 is in the middle, and the priority of the recommendation manner 1 is lowest. During actual implementation, one or more to-be-recommended applications may be determined in at least one of the foregoing three recommendation manners, and the determined applications are arranged in descending order of priorities. In this way, a plurality of applications may be recommended to the user in the order of priorities, for the user to select during screen splitting. Use experience of the user is improved.

How to generate the split-screen pair information specific to the user based on the user historical behavior data in the recommendation manner 2 is first described below by using an example. The split-screen pair information specific to the user includes a split-screen pair (referred to as a first split-screen pair) and a corresponding scenario parameter. The first split-screen pair is a combination of two applications. For example, the first split-screen pair includes an application A and an application B.

In this embodiment of this application, when the user uses the electronic device, the electronic device may obtain, in real time, behavior data (referred to as user behavior data for short) of using an APP by the user. When the user behavior data satisfies a preset condition, one piece of split-screen pair information is recorded. Different from a related technology, in this embodiment of this application, the electronic device records a split-screen pair that is usually used by the user in a particular scenario.

It should be noted that, one piece of split-screen pair information is used as an example herein for example description. During actual implementation, the electronic device may generate a plurality of pieces of split-screen pair information, and each of the plurality of pieces of split-screen pair information includes a split-screen pair and a corresponding scenario parameter.

Optionally, a specific implementation in which the electronic device generates first split-screen pair information based on the user behavior data may include any manner.

### Manner 1:

Optionally, when the user behavior data indicates an event in which the user usually first triggers starting of the application A and then triggers starting of the application B immediately in a particular scenario, the electronic device may record the following split-screen pair information: a split-screen pair including the application A and the application B, and a corresponding scenario parameter.

Specifically, a quantity of times of the foregoing event in a preset time period may be counted based on the user behavior data. If the counted quantity of times is greater than or equal to a preset quantity of times, the electronic device may record the split-screen pair information. Some example implementations are provided below.

The user behavior data may include a name and a type of the running application, time information during running of the application, position information during running of the application, and/or network information used during running of the application. Correspondingly, a first scenario parameter may also include the time information, the position information, and/or the network information.

In some embodiments, when the user behavior data indicates that the user first triggers starting of the application A (for example, a meeting APP) and then triggers starting of the application B (for example, a memo APP) within a time period (which is denoted as time T, for example, a time period from 9 a.m. to 10 a.m. every Monday), the electronic device may record the following split-screen pair information: a split-screen pair A|B and a corresponding scenario parameter (the time T).

In some embodiments, when the user behavior data indicates that, during a schedule S, the user always triggers starting of an application D (for example, a life service APP) after triggering starting of an application C (for example, a map APP), the electronic device may record the following split-screen pair information: a split-screen pair C|D and a corresponding scenario parameter (the schedule S).

For example, the specific schedule may be indicated based on meeting information, train ticket information, air ticket information, and/or accommodation information. For example, the meeting information may indicate specific meeting time in the schedule. For another example, the accommodation information may indicate specific check-in time and an accommodation position in the schedule.

In some embodiments, when the user behavior data indicates that the user first triggers starting of an application E (for example, a clock-in APP) and then triggers starting of an application F (for example, a health APP) at a position (which is denoted as a position P, for example, a company doorway) within a time period (which is denoted as time T, for example, a time period from 8 a.m. to 9 a.m. everyday in each week), the electronic device may record the following split-screen pair information: a split-screen pair E|F and corresponding scenario parameters (the time T and the position P).

In some embodiments, when the user behavior data indicates that the user first triggers starting of an application G (for example, a video APP) and then triggers starting of an application H (for example, a social APP) at a position (which is denoted as a position P, for example, at home) within a time period (which is denoted as time T, for example, a time period from 8 p.m. to 9 p.m. everyday) when Wi-Fi (which is denoted as a network W, for example, identified by using an SSID) is connected, the electronic device may record the following split-screen pair information: a split-screen pair G|H and corresponding scenario parameters (the time T, the position P, and the network W).

The time T may be determined based on the current system time of the electronic device. The position P may be determined based on global positioning system (global positioning system, GPS) positioning information. The network W may be determined based on a Wi-Fi service set identifier (service set identifier, SSID).

### Manner 2:

In some embodiments, when the user behavior data indicates that the user usually displays two applications (for example, an application A and an application B) through screen splitting, the electronic device may record split-screen pair information: a split-screen pair A|B and a corresponding scenario parameter.

Optionally, each time the electronic device displays interfaces of the two applications through screen splitting, the electronic device records split-screen characteristic information of the two applications. The split-screen characteristic information includes an accumulated quantity of split-screen times and/or accumulated split-screen duration within a preset time period. In particular, the accumulated quantity of split-screen times and/or the accumulated split-screen duration may be counted based on the user behavior data. Some example implementations are provided below.

Scenario 1: If the accumulated quantity of split-screen times is greater than or equal to a preset quantity of times, for example, the accumulated quantity of split-screen times of the two applications within a preset time period (for example, 12 hours) is greater than or equal to a preset quantity of times threshold (for example, five times), the two applications may be considered to be a pair of applications accustomed by the user to be displayed in coordination through screen splitting. In this case, the electronic device uses the two applications as a split-screen pair, and records information about the split-screen pair.

For example, if the user triggers the electronic device to display the application A and the application B through screen splitting, the electronic device accumulates a quantity of times of displaying the application A and the application B through screen splitting. When the accumulated quantity of times of displaying the application A and the application B through screen splitting is equal to five times, it may be considered that the application A and the application B are a pair of applications accustomed by the user to be displayed in coordination through screen splitting, and the electronic device records the split-screen pair A|B.

Scenario 2: If the accumulated split-screen duration is greater than or equal to preset duration, for example, the accumulated split-screen duration of the two applications within a preset time period (for example, one hour) is greater than or equal to a preset duration threshold (for example, 10 minutes), the two applications may be considered to be a pair of applications accustomed by the user to be displayed in coordination through screen splitting. In this case, the electronic device uses the two applications as a split-screen pair, and records information about the split-screen pair.

For example, if the user triggers the electronic device to display the application A and the application B through screen splitting, the electronic device accumulates duration of displaying the application A and the application B through screen splitting. When the accumulated duration of displaying the application A and the application B through screen splitting is equal to 10 minutes, it may be considered that the application A and the application B are a pair of applications accustomed by the user to be displayed through screen splitting, and the electronic device records the split-screen pair A|B.

It needs to be noted that a possible implementation in which the split-screen pair is determined based on the accumulated quantity of split-screen times and/or the accumulated split-screen duration when an application scenario is not considered is described above. The following describes, by using an example, a possible implementation in which the split-screen pair is determined when the application scenario is considered.

In some embodiments, when the user behavior data indicates that the user always triggers starting of split-screen display of the application A (for example, a meeting APP) and the application B (for example, a memo APP) within a time period (which is denoted as time T, for example, a time period from 9 a.m. to 10 a.m. every Monday), the electronic device may record the following split-screen pair information: a split-screen pair A|B and a corresponding scenario parameter (the time T).

In some embodiments, when the user behavior data indicates that, during a schedule S, the user always triggers starting of split-screen display of an application C (for example, a map APP) and an application D (for example, a life service APP), the electronic device may record the following split-screen pair information: a split-screen pair C|D and a corresponding scenario parameter (the schedule S).

In some embodiments, when the user behavior data indicates that the user always triggers starting of split-screen display of an application E (for example, a clock-in APP) and an application F (for example, a health APP) at a position (which is denoted as a position P, for example, a company doorway) within a time period (which is denoted as time T, for example, a time period from 8 a.m. to 9 a.m. everyday in each week), the electronic device may record the following split-screen pair information: a split-screen pair E|F and corresponding scenario parameters (the time T and the position P).

In some embodiments, when the user behavior data indicates that the user always triggers starting of split-screen display of an application G (for example, a video APP) and an application H (for example, a social APP) at a position (which is denoted as a position P, for example, at home) within a time period (which is denoted as time T, for example, a time period from 8 p.m. to 9 p.m. everyday) when Wi-Fi (which is denoted as a network W, for example, identified by using an SSID) is connected, and duration of the split-screen display is greater than 30 minutes, the electronic device may record the following split-screen pair information: a split-screen pair G|H and corresponding scenario parameters (the time T, the position P, and the network W).

It should be noted that the split-screen pairs and the corresponding scenario parameters provided in the manner 2 and a manner 3 are example enumeration. It may be understood that, during actual implementation, the split-screen pair determined or recorded in this embodiment of this application may alternatively be a combination of other applications, and the corresponding scenario parameter may alternatively include other parameters or may alternatively be a combination of various parameters. For example, the Wi-Fi network is used above as an example for example description. During actual implementation, the scenario parameter may alternatively include cellular network information. Alternatively, the scenario parameter may include that the electronic device is connected to an audio peripheral such as a Bluetooth headset or a Bluetooth vehicle-mounted machine. Alternatively, the scenario parameter may include that the electronic device is connected to a peripheral such as a game controller, a keyboard and a mouse, and/or a stylus.

### Manner 3:

In some embodiments, the electronic device may determine a split-screen pair with a strong correlation based on an application switching frequency. In other words, when the user behavior data indicates that the two applications are frequently switched in foreground within a time period, the two applications may be considered to be a pair of applications accustomed by the user to be displayed in coordination. In this case, the two applications are recorded as a split-screen pair, and a corresponding scenario parameter is not limited.

It needs to be noted that, that the two applications are frequently switched may be determined in the following manner: a quantity of times of switching between the application A and the application B by the user within preset duration X is greater than or equal to a preset quantity Y of times. When the application A is switched to the application B, one time of switching is counted, and when the application B is switched to the application A, one time of switching is counted. X represents duration of a preset time period. The preset time period represents a time period that is after first-time switching between the applications is detected. Y represents a threshold of a quantity of switching times. X and Y may be used as system service parameters. Specific values may be configured based on an actual use requirement. For example, default values of X and Y may be obtained based on big data.

It needs to be noted that frequent switching between the application A and the application B refers to frequent switching between a full-screen window of the application A and a full-screen window of the application B. For example, when an interface of the application A is displayed in full screen, in response to an operation of the user, the electronic device switches to display an interface of the application B in full screen. In this way, switching is performed back and forth in a full-screen display scenario for a plurality of times.

For example, when the electronic device detects that a quantity of times of switching back and forth between the application A and the application B within preset duration (for example, five minutes) is greater than or equal to a preset quantity of times (for example, 10 times), that is, the application A and the application B satisfy a switching condition, the electronic device may record the split-screen pair A|B.

It may be understood that the electronic device records two applications as a split-screen pair provided that it is detected that the two applications satisfy a condition of frequent switching. For example, when the application A and the application C satisfy the condition of frequent switching, the electronic device may alternatively record the split-screen pair A|C.

A specific implementation in which the electronic device determines the split-screen pair information by obtaining and learning the user behavior data is described above. It needs to be noted that, for a special case in which the user initially uses a new electronic device, because the electronic device has not obtained the user behavior data in this case, the electronic device cannot generate the split-screen pair information specific to the user based on the user behavior data. In view of this, before leaving a factory, the electronic device usually stores predefined split-screen pair information (the recommendation manner 1). The split-screen pair information includes one or more predefined split-screen pairs. The one or more predefined split-screen pairs may be split-screen pairs determined based on user big data. For example, Table 1 below shows the one or more predefined split-screen pairs.

**Table 1**

| |
|---|
| Predefined split-screen pair |
| Meeting APP + Memo APP |
| Read APP + Comment APP |
| Video APP + Social APP |
| Document editing APP + Browser APP |
| Document editing APP + Mail APP |
| Map APP + Life service APP |
| Map APP + Social APP |
| Game APP + Social APP |

It may be understood that Table 1 is example enumeration. During actual implementation, the predefined split-screen pair may alternatively include any other possible split-screen pair. This is not limited in this embodiment of this application.

It needs to be noted that the predefined split-screen pairs may be directly invoked when the user triggers screen splitting. As the user uses the electronic device for a plurality of times, the electronic device generates the split-screen pair information specific to the user based on the user behavior data after obtaining the user behavior data. It may be understood that the split-screen pair information determined by learning the user behavior data is more consistent with a use habit of the user. Therefore, a split-screen APP recommended to the user in a split-screen scenario is more consistent with a user requirement.

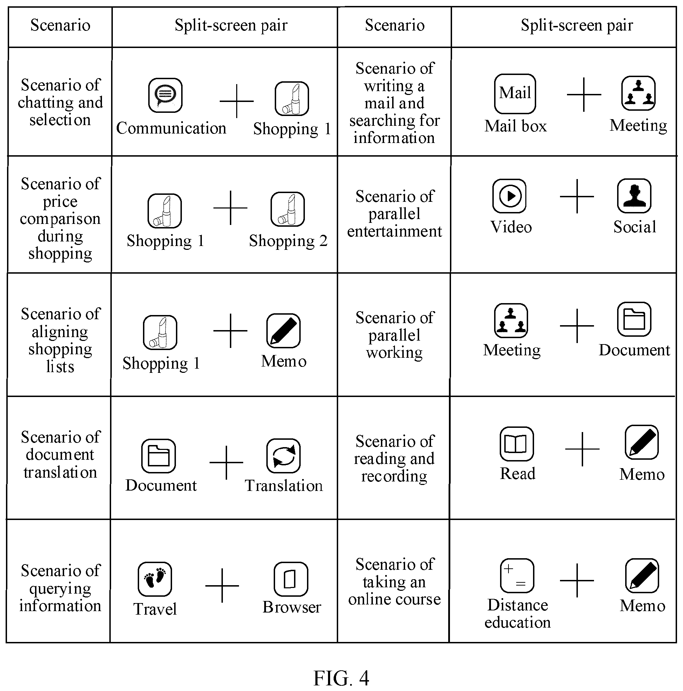

The split-screen pair information determined by learning the user behavior data is enumerated by using an example below. The split-screen pair information includes an application scenario and two APPs that are usually displayed in coordination through screen splitting in the application scenario. For example, as shown in FIG. 4, in a scenario of chatting and selection, a communication APP and a shopping APP 1 form a split-screen pair. In a scenario of price comparison during shopping, the shopping APP 1 and a shopping APP 2 form a split-screen pair. In a scenario of aligning shopping lists, the shopping APP 1 and a memo APP form a split-screen pair. In a scenario of document translation, a document APP and a translation APP form a split-screen pair. In a scenario of querying information, a travel APP and a browser APP form a split-screen pair. In a scenario of searching for information in a mail, a mail box APP and a teleconference APP form a split-screen pair. In a scenario of parallel entertainment, a video APP and a social APP form a split-screen pair. In a scenario of parallel working, the teleconference APP and the document APP form a split-screen pair. In a scenario of reading and recording, a read APP and the memo APP form a split-screen pair. In a scenario of taking an online course, a distance education APP and the memo APP form a split-screen pair.

It should be noted that some common split-screen pairs are enumerated above by using examples. It may be understood that, during actual implementation, the embodiments of this application include, but are not limited to, the scenarios and the split-screen pairs that are enumerated above. Details may be determined based on an actual use requirement, and are not limited in the embodiments of this application.

In the embodiments of this application, the split-screen pair information specific to the user may be determined by learning the user behavior data. A priority of the split-screen pair information specific to the user is higher than that of predefined split-screen pair information. When a split-screen application is recommended, the split-screen pair information specific to the user is mainly considered, and the predefined split-screen pair information is secondarily considered, so that the recommended split-screen application is usually more consistent with a user requirement.

It should be noted that, in the locally stored split-screen pair information, an application that already has an association relationship with the first application may be one or more applications, or may include more applications.

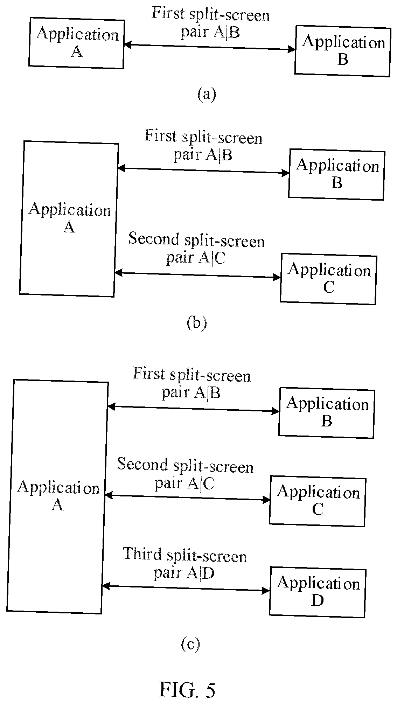

For example, as shown in (a) in FIG. 5, first split-screen pair information includes a first split-screen pair A|B that includes an application A and an application B. In other words, an application that has an association relationship with the application A includes the application B. The application B may be an application expected by the user to be displayed through screen splitting, and may be used as a recommended application related to the application A.

For example, as shown in (b) in FIG. 5, first split-screen pair information includes a first split-screen pair A|B that includes an application A and an application B, and a second split-screen pair A|C that includes the application A and an application C. In other words, an application that has an association relationship with the application A includes the application B and the application C. The application B and the application C may be applications expected by the user to be displayed through screen splitting, and may be used as recommended applications related to the application A.

For example, as shown in (c) in FIG. 5, first split-screen pair information includes a first split-screen pair A|B that includes an application A and an application B, a second split-screen pair A|C that includes the application A and an application C, and a third split-screen pair A|D that includes the application A and an application D. In other words, an application that has an association relationship with the application A includes the application B, the application C, and the application D. The application B, the application C, and the application D may be applications expected by the user to be displayed through screen splitting, and may be used as recommended applications related to the application A.

It may be understood that the split-screen pair information shown in FIG. 5 are example descriptions. Details may be determined based on an actual use requirement, and are not limited in the embodiments of this application.

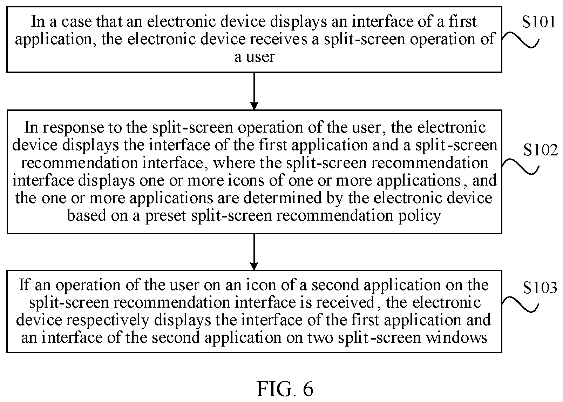

FIG. 6 is a schematic flowchart of an application recommendation method according to an embodiment of this application. Refer to FIG. 6. The method includes the following steps S101 to S103.

S101: In a case that an electronic device displays an interface of a first application, the electronic device receives a split-screen operation of a user.

In this embodiment of this application, a first-level touch control is displayed on the interface of the first application, and the first-level touch control is for representing a control that switches a screen display form. In this case, after receiving a touch operation of the user on the first-level touch control, the electronic device displays a second-level touch control. The second-level touch control includes a split-screen control, and the split-screen control is for triggering a display screen of the electronic device to display interfaces of different applications in a plurality of windows. Then, the electronic device receives a touch operation of the user on the split-screen control. In this way, the user implements the split-screen operation by touching the first-level touch control and the second-level touch control.

As described above, in this embodiment of this application, the second-level touch control may further include a full-screen control and a floating-window control. The full-screen control is for triggering the display screen of the electronic device to display an interface of an application in full screen. The floating-window control is for triggering the display screen of the electronic device to display an interface of an application in a floating window.

In this embodiment of this application, when the user taps the split-screen control, the electronic device may first determine, as a recommended application, one or more applications that match or are associated with a foreground application. The recommended application (which is specifically an icon of the application) is then displayed in a recommended application bar in a split-screen recommendation interface for the user. Because the recommended application may include an application expected by the user for split-screen display, it is convenient for the user to quickly find an application displayed together with the foreground application through screen splitting.

S102: In response to the split-screen operation of the user, the electronic device displays the interface of the first application and the split-screen recommendation interface, where the split-screen recommendation interface displays one or more icons of one or more applications, and the one or more applications are determined by the electronic device based on a preset split-screen recommendation policy.

The preset split-screen recommendation policy includes at least one of a recommendation manner 1, a recommendation manner 2, and a recommendation manner 3 below.

In the recommendation manner 1, the electronic device may pre-store a split-screen pair rule determined based on big data. When receiving an operation of triggering screen splitting by the user, the electronic device may recommend an application to the user based on a preset split-screen pair rule, for the user to select during screen splitting.

In the recommendation manner 2, the electronic device may generate, based on user historical behavior data in advance, split-screen pair information specific to the user. When receiving an operation of triggering screen splitting by the user, the electronic device may recommend an application to the user based on the split-screen pair information specific to the user, for the user to select during screen splitting.

In the recommendation manner 3, when an operation of triggering screen splitting by the user is received, if it is determined that current system time is within a time period corresponding to schedule or journey information of the user, or a current position is within a position range corresponding to the schedule or journey information of the user, a related APP corresponding to the schedule or journey information is recommended to the user, to prompt the user to select during screen splitting.

In this embodiment of this application, the split-screen recommendation interface may include the recommended application bar. The recommended application bar is for displaying one or more icons of one or more applications determined in various recommendation manners. Optionally, a plurality of applications in the recommended application bar may be arranged in descending order of recommendation priorities of the applications.

The foregoing three recommendation manners correspond to different priorities. One or more applications may be determined in each recommendation manner. The recommended applications are arranged in descending order of the corresponding priorities. For example, it is assumed that a priority of the recommendation manner 3 is highest. In this case, an application determined in the recommendation manner 3 is ranked top. It is assumed that a priority of the recommendation manner 1 is highest. In this case, an application determined in the recommendation manner 1 is ranked last.

For example, the foreground application is the application A, the application determined in the recommendation manner 3 is the application B, and the application determined in the recommendation manner 2 is the application C. Correspondingly, a recommendation priority of the application B is higher than a recommendation priority of the application C. In the split-screen recommendation interface, an icon of the application B and an icon of the application C may be sequentially displayed in descending order of the recommendation priorities. In this way, it is more convenient for the user to find a required application for split-screen display, and use experience of the user is improved.

For another example, a recommendation priority of an application may be determined based on a priority of a split-screen pair. When a priority of a split-screen pair is higher, a recommendation priority of an application in the split-screen pair is higher. The electronic device may determine display priorities of a plurality of split-screen pairs corresponding to the first application.

In other words, after the electronic device receives the split-screen operation of the user, the electronic device may determine, based on the split-screen pair information, an application that already has an association relationship with the first application. Specifically, when receiving the split-screen operation of the user, the electronic device may recommend, to the user based on the split-screen pair information obtained by learning the user behavior data or the pre-stored split-screen pair information, an application associated with the application displayed in foreground, to help the user quickly find an application expected to be displayed in coordination through screen splitting in a current scenario.

A possible implementation of how to determine, based on the split-screen recommendation policy, the application recommended to the user in a split-screen scenario in the solution of this application is described in detail below. It needs to be noted that, in the recommendation manner 1, determining of a scenario is weakened during split-screen recommendation. In both the recommendation manner 2 and the recommendation manner 3, the application recommended to the user may be determined based on information such as the scenario or a schedule.

Recommendation manner 1: A to-be recommended application is determined based on preset split-screen pair information.

Specifically, an application matching an application type of the APP run in foreground may be determined based on the preset split-screen pair information (including the split-screen pair shown in Table 1). A classification or type of an application may be a type specified by a developer when the application is released to an application market. For example, the meeting APP and the memo APP are a preset split-screen pair. When the meeting APP is an APP run in foreground, the memo APP may be determined as a recommended application related to the meeting APP.

For example, when the user taps the split-screen control to trigger switching from the full-screen display to the split-screen display, the electronic device may search, in the preset split-screen pair, for a split-screen pair corresponding to an application (where the application A is used as an example) currently displayed in full screen. It is assumed that a split-screen pair corresponding to the application A includes A|B. The electronic device may determine the application B as the recommended application related to the application A. It may be understood that the application B is an application that matches or is associated with the application A currently displayed in full screen. Because the application B may be an application expected by the user for split-screen display, it is convenient for the user to quickly find an application displayed together with the foreground application through screen splitting.

Recommendation manner 2: The electronic device determines a to-be-recommended application based on the split-screen pair information obtained by learning the user behavior data.

For example, a considered factor when the to-be-recommended application is determined and a status parameter corresponding to each factor are enumerated in Table 2 below.

**Table 2**

| Considered factor | Status parameter |
|---|---|
| Application | Launch status of the application |
| Split-screen pair usually used for the application | Launch parameter of the split-screen pair |
| Time | System time |
| Position | GPS positioning information |
| Network information | Wi-Fi SSID, or whether a VPN is used |
| Network information | Cellular information |
| Audio peripheral | Bluetooth headset or Bluetooth vehicle-mounted machine |
| Peripheral | Game controller, keyboard and mouse, or stylus |

As shown in Table 2, the considered factor may include the application, the split-screen pair usually used for the application, the time, the position, the network information, the audio peripheral, and/or another peripheral. The launch status of the application may include starting or shutting down.

Each time the user manually operates screen splitting, the electronic device may record, based on a combination of the factors such as the application, the time, the position, the network information, the audio peripheral, and/or the another peripheral, a split-screen pair launch parameter when the user uses the split-screen pair. The split-screen pair launch parameter may include the system time, the GPS position information, the Wi-Fi SSID, whether the VPN is used, the cellular information, whether the Bluetooth headset or the Bluetooth vehicle-mounted machine is connected, whether the game controller, the keyboard and the mouse, and/or the stylus is used, and the like.

Based on the recommendation manner 2, a current scenario parameter may be obtained based on status parameters (including the split-screen pair launch parameter) corresponding to one or more of the foregoing considered factors. Corresponding split-screen pair information is then found based on the current scenario parameter and the application displayed in foreground. Further, an application associated with the application displayed in foreground may be determined as the recommended application based on the split-screen pair information.

For example, in a case that the electronic device records the split-screen pair A|B and the split-screen pair A|C, when the user taps the split-screen control to trigger switching from the full-screen display to the split-screen display, the electronic device may determine, based on the recorded split-screen pairs, whether there is a split-screen pair corresponding to the application (such as the application A) currently displayed in full screen. When it is determined that the split-screen pair A|B and the split-screen pair A|C that correspond to the application A exist, the electronic device may determine, based on the split-screen pair A|B and the split-screen pair A|C, that both the application B and the application C are recommended applications, and display the application B and the application C in the recommended application bar in the split-screen recommendation interface for the user. It may be understood that the application B and the application C are a plurality of applications that match or are associated with the application A currently displayed in full screen. Because the application B and/or the application C may be applications expected by the user for split-screen display, it is convenient for the user to quickly find an application displayed together with the foreground application through screen splitting.

It can be understood that, in the foregoing recommendation manner 2, the split-screen application is recommended based on a historical use habit of the user, so that an application satisfying a user requirement can be more accurately recommended, and use experience of the user is improved.

Recommendation manner 3: An application is recommended to the user based on schedule or journey information of the user.

Schedule information of a day of the user may be read from a calendar of the user. For example, as shown in Table 3 below, the schedule information may include meeting information, air ticket information, train ticket information, ticket information, and accommodation information. Each item of the schedule information corresponds to one or more recommended APPs. For example, an APP correspondingly recommended for the meeting information includes a video meeting APP. An APP correspondingly recommended for the air ticket information includes a trip APP. An APP correspondingly recommended for the train ticket information includes a high-speed-rail management APP. An APP correspondingly recommended for the accommodation information includes a travel APP and a navigation APP.

**Table 3**

| | |
|---|---|
| Schedule information | Recommended APP |
| Meeting information | Video meeting APP |
| Air ticket information | Trip APP |
| Train ticket information | High-speed-rail management APP |
| Accommodation information | Travel APP |
| Accommodation information | Navigation APP |

It needs to be noted that, if a moment at which the user triggers the split-screen operation is within a time period corresponding to a schedule, an APP corresponding to the schedule is directly recommended to the user. For example, the APP corresponding to the schedule is displayed on an interface of a foreground application, to prompt the user to display the foreground application and the recommended application through screen splitting.

For example, it is assumed that the schedule information is obtained as the meeting information, and a start time of a meeting indicated by the meeting information is 2 p.m.. If a moment (for example, 1:55 p.m.) at which the user triggers the split-screen operation on the interface of the foreground application is within a time period of five minutes before the start time of the meeting, an APP corresponding to the schedule may be displayed on the interface of the foreground application, to prompt the user to display the foreground application and the recommended application through screen splitting.

It can be learned from the foregoing descriptions that, in the embodiments of this application, an application that shares a screen with the first APP may be determined with reference to the APP (the first APP) run in foreground and scenario data such as location based service (location based services, LBS) information, Wi-Fi information, time, or a schedule. It may be understood that the first APP and a second APP form a split-screen pair. It needs to be noted that the second APP recommended by the system may be one APP, or may be two or more APPs. Details may be determined based on an actual use condition, and are not limited in the embodiments of this application. Where the second APP includes two or more APPs, each APP of the second APPs for a split-screen pair with the first APP.

In some other embodiments, the electronic device may alternatively recommend one or more applications usually used by the user within a recent time period. Specifically, the electronic device may determine, as one or more recommended applications, one or more applications that are frequently used by the user within a time period (for example, one month). When the user taps the split-screen control to trigger screen splitting, the electronic device displays the recommended application (which is specifically an icon of the application) in the recommended application bar in the split-screen recommendation interface for the user. Because the recommended application may include an application expected by the user for split-screen display, it is convenient for the user to quickly find an application for which the screen is to be split.

Alternatively, in the split-screen recommendation interface, N (for example, six) areas may be preset in the recommended application bar, respectively for displaying icons of recommended applications. It is assumed that two APPs may be recommended in each of the foregoing three recommendation manners. In this case, six APPs may be recommended in total in the three recommendation manners. Therefore, icons of the six recommended APPs may be sequentially arranged in descending order of priorities.

It needs to be noted that a quantity of applications recommended in each recommendation manner and a quantity of positions that can display an icon in the recommended application bar are not limited in this embodiment of this application, and may be specifically determined based on an actual use requirement.

Some possible implementation scenarios of the application recommendation method provided in the embodiments of this application during actual applications are provided below by using examples.

Scenario 1: The electronic device detects that the user first triggers starting of an application A (for example, a clock-in APP) and then triggers starting of an application B (for example, a health APP) at a position (which is denoted as a position 1, for example, a company doorway) within a time period (which is denoted as time 1, for example, a time period from 8 o'clock to 9 o'clock everyday in each week). The electronic device may record that a split-screen pair of the application A and the application B is recommended in a scenario of the time 1 and the position 1. Then, when the user manually triggers screen splitting of the clock-in APP at the time 1 and the position 1, the health APP may be directly recommended.

In some implementations, when the electronic device detects that the time 1 and the position 1 satisfy a condition, the electronic device may actively recommend the split-screen pair of the application A and the application B, to prompt the user that the current two applications may be displayed through screen splitting.

For example, the electronic device detects that the user first triggers starting of the clock-in APP and then triggers starting of the health APP near the company within the time period from 8 o'clock to 9 o'clock everyday in each week. The electronic device may record that the split-screen pair of the application A and the application B is recommended in the scenario of the time 1 and the position 1. When the electronic device detects that the user is near the company within the time period from 8 o'clock to 9 o'clock everyday in each week, the electronic device may actively recommend the split-screen pair of the application A and the application B, to prompt the user that the current two applications may be displayed through screen splitting.

In some other implementations, when the electronic device detects that the user triggers starting of the application A, if the time 1 and the position 1 satisfy the condition, the electronic device may actively recommend the split-screen pair of the application A and the application B, to prompt the user that the current two applications may be displayed through screen splitting.

In still some other implementations, when the electronic device detects that the user triggers screen splitting on an interface of the application A, if the time 1 and the position 1 satisfy the condition, the electronic device may actively recommend displaying the application B and the application A in coordination through screen splitting.

Scenario 2: The electronic device detects that the user always triggers starting of an application B (for example, a memo APP) after triggering starting of an application A (for example, a meeting APP) for a video meeting (which is denoted as a schedule 1). The electronic device may record that a split-screen pair of the application A and the application B is recommended in a scenario of the schedule 1.

In some other implementations, when the electronic device detects that the user triggers starting of the application A or triggers screen splitting on an interface of the application A, if the schedule 1 satisfies a condition, the electronic device may actively recommend displaying the application B and the application A in coordination through screen splitting. For example, when the user triggers starting of the meeting APP for a video meeting, the electronic device may recommend starting the memo APP through screen splitting for shorthand.

Scenario 3: The electronic device stores a predefined rule (a split-screen pair A|B). When the electronic device detects that the user triggers starting of the application A (for example, a document APP), the electronic device may recommend, based on the predefined rule, the user to start the application B (for example, a document APP) through screen splitting, to compare documents.

According to the solution of this application, when the user triggers starting of an application, the electronic device may intelligently recommend a split-screen pair based on a user intention. Because the recommended application is an application that is highly related to the foreground application, in other words, an application that is accustomed or expected by the user to be displayed with the foreground application in coordination through screen splitting is included, it is convenient for the user to quickly find an application for which a screen is to be split. In the solution of this application, the scenario requirement of the user for quickly finding the application for coordinate screen splitting with the foreground application can be satisfied, so that convenience of using the split-screen function by the user is greatly improved.

It needs to be noted that, in a case in which screen splitting is triggered on the interface of the first application, locally stored split-screen pair information may include a plurality of split-screen pairs related to the first application. To improve accuracy of application recommendation, the electronic device may further filter the plurality of split-screen pairs related to the first application in the locally stored split-screen pair information, to determine a recommended application related to the first application, so that a split-screen pair including the recommended application and the foreground application better satisfies a habit or an expectation of the user. Therefore, according to the solution of this application, a scenario requirement of the user for quickly finding the application for coordinate screen splitting with the foreground application can be satisfied, so that convenience of using the split-screen function by the user is greatly improved.

In some embodiments, the electronic device may obtain user big data related to a split-screen pair. Further, the electronic device may determine the recommended application related to the first application based on both the user big data related to the split-screen pair and the locally stored split-screen pair information.

For example, it is assumed that a split-screen pair A|B including an application A and an application B is included in the user big data related to the split-screen pair, and the locally stored split-screen pair information includes the split-screen pair A|B including the application A and the application B, and a split-screen pair A|C including the application A and an application C. In this case, the user big data related to the split-screen pair is compared with the locally stored split-screen pair information, and the application B is determined as a recommended application related to the application A.

It needs to be noted that, in a case that a plurality of applications are recommended in a recommendation manner, priorities of the plurality of applications may further be determined. For example, it is assumed that a first split-screen pair and a second split-screen pair are determined in the recommendation manner 2. In the solution of this application, priorities of the first split screen pair and the second split-screen pair may further be determined. An implementation of comparing priorities of two split-screen pairs is described below.

Manner 1: If an accumulated quantity of split-screen times of a first split-screen pair A|B is greater than an accumulated quantity of split-screen times of a second split-screen pair A|C, the electronic device determines that a recommendation priority of the first split-screen pair A|B is higher than a recommendation priority of the first split-screen pair A|C.

Manner 2: If accumulated split-screen duration of a first split-screen pair A|B within a preset time period is greater than accumulated split-screen duration of a first split-screen pair A|C within the preset time period, the electronic device determines that a display priority of the first split-screen pair A|B is higher than a display priority of the first split-screen pair A|C. Correspondingly, an application recommended based on the application A includes the application B and the application C, and a recommendation priority of the application B is higher than a recommendation priority of the application C.

Optionally, in the embodiments of this application, the split-screen recommendation interface may further include bar of an application supporting screen splitting. The bar of the application supporting screen splitting is for displaying icons of all or a part of applications supporting screen splitting in the electronic device. Specifically, in the solution of this application, the bar of the application supporting screen splitting displays an icon of the second application.

For example, the bar of the application supporting screen splitting may display icons of a part of the applications supporting screen splitting in the electronic device. The part of the applications do not include an application displayed in the recommended application bar. In other words, when the recommended application bar displays a part of recommended applications, the part of recommended applications are not displayed in the bar of the application supporting screen splitting, to avoid redundant display. Therefore, it is more convenient for the user to quickly find an application expected to be displayed through screen splitting.

Further, optionally, the plurality of applications in the bar of the application supporting screen splitting may be arranged in recommendation priorities of the applications. For example, the applications may be sequentially arranged in descending order of the recommendation priorities. A recommendation priority of an application may be determined based on user behavior data such as a frequency or duration of using the application.

Optionally, the electronic device may display the interface of the first application and the split-screen recommendation interface in any one of the following manners.

Manner 1: The electronic device may respectively display the interface of the first application and the split-screen recommendation interface in two split-screen windows.

Manner 2: The electronic device may display the split-screen recommendation interface in a form of a floating window above the interface of the first application.

It should be understood that the foregoing two display manners are example descriptions. During actual implementation, the electronic device may alternatively display the interface of the first application and the split-screen recommendation interface in another possible display manner. This is not limited in the embodiments of this application.

S103: If an operation of the user on the icon of the second application on the recommended application bar is received, the electronic device respectively displays the interface of the first application and an interface of the second application on two split-screen windows.

For example, it is assumed that the split-screen pair information includes an application pair A|B. When the user triggers screen splitting on an interface of the application A, the electronic device determines, based on the split-screen pair information, the application B as a recommended application related to the application A, and then displays an icon of the application B in the recommended application bar. If the electronic device receives an operation of the user on the icon of the application B, the electronic device may respectively display the interface of the application A and an interface of the application B in a left split-screen window and a right split-screen window; or respectively display the interface of the application A and the interface of the application B in an upper split-screen window and a lower split-screen window.

For example, it is assumed that the split-screen pair information includes an application pair A|B and an application pair A|C. After determining, based on the split-screen pair information, the application B and the application C as recommended applications related to the application A, the electronic device may display icons of the application B and the application C in the recommended application bar. If the electronic device receives an operation of the user on the icon of the application C, the electronic device may respectively display the interface of the application A and an interface of the application C in a left split-screen window and a right split-screen window; or respectively display the interface of the application A and the interface of the application C in an upper split-screen window and a lower split-screen window.

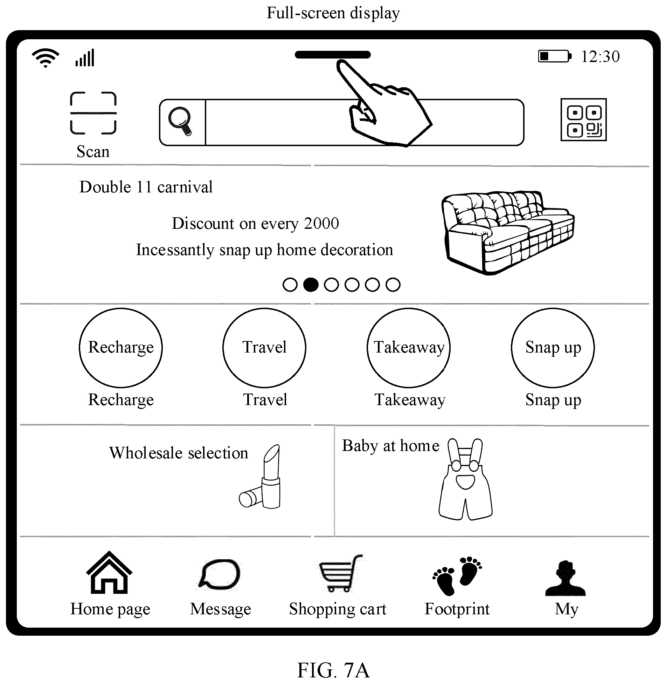

In some embodiments, the application recommendation method provided in the embodiments of this application may be applied to a scenario of entering split-screen display from full-screen display. For example, as shown in FIG. 7A, an electronic device respectively displays a main interface of a shopping APP in a left split-screen window and a right split-screen window. The main interface of the shopping APP displays a first-level touch control.

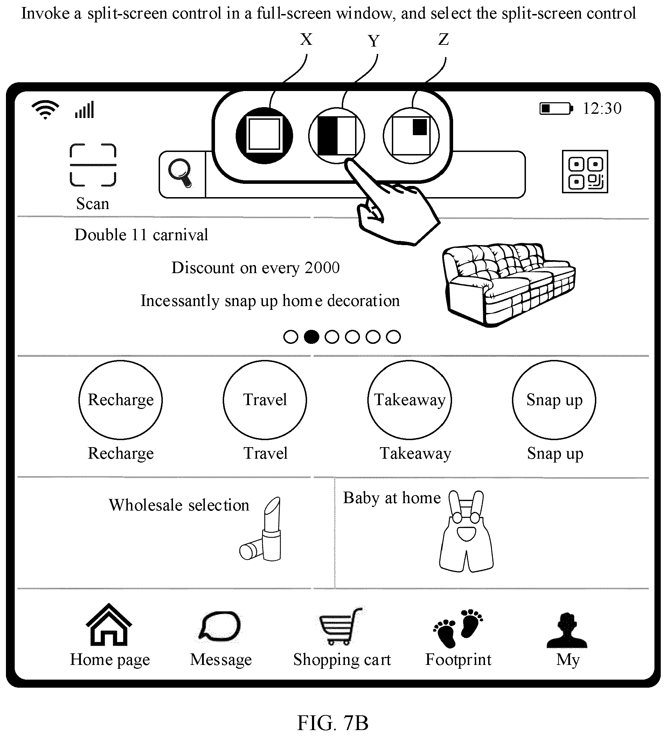

As shown in FIG. 7B, when the electronic device receives an operation of a user on the first-level touch control, the electronic device invokes, in a full-screen window of the shopping APP, a plurality of controls for switching a display manner of the screen, such as a full-screen control X, a split-screen control Y, and a floating-window control Z.

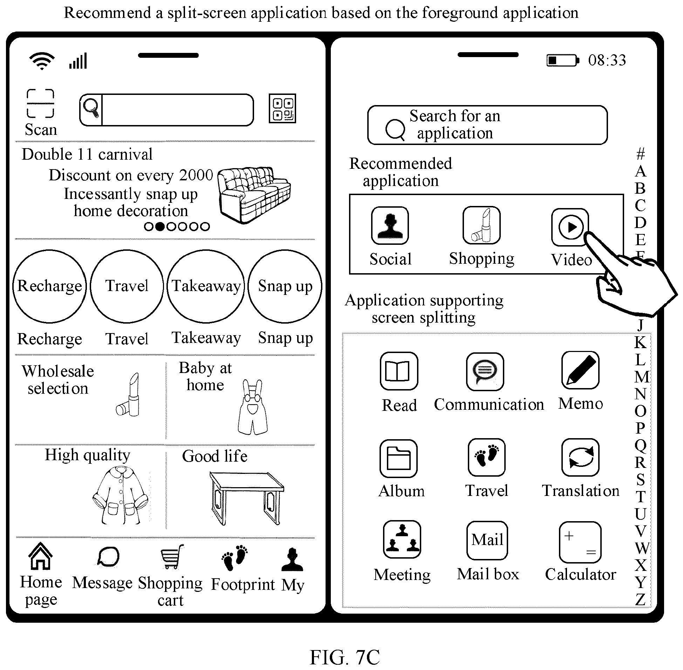

As shown in FIG. 7C, when the electronic device receives an operation of the user on the split-screen control Y, the electronic device may display the main interface of the shopping APP and a split-screen recommendation interface through screen splitting. A recommended application bar displays icons of a plurality of applications recommended based on the foregoing policy in this application. For example, the recommended application bar displays icons of a plurality of applications, such as a social APP, a shopping APP, and a video APP, recommended based on the application (shopping APP) on the left.

It needs to be noted that the plurality of applications displayed in the recommended application bar are determined by using any application recommendation method provided in the foregoing embodiments of this application. For example, the shopping APP and the video APP may be a preset split-screen pair generated based on user historical behavior data. When screen splitting is triggered on the interface of the shopping APP, the video APP may be displayed in the recommended application bar in the split-screen recommendation interface, to facilitate the user to find an expected application to be displayed together with the foreground application through screen splitting. In addition, the recommended applications may be sequentially arranged in descending order of priorities.

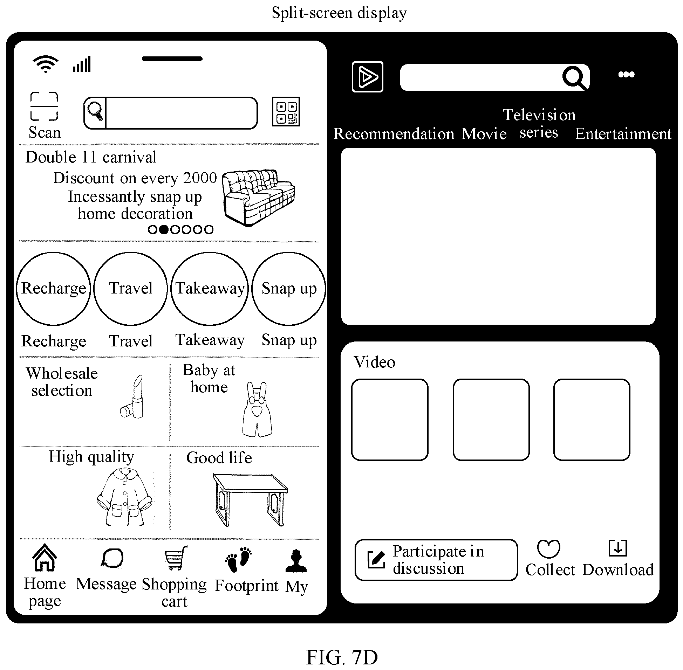

As shown in FIG. 7D, when the electronic device receives an operation of the user on a calculator APP, the electronic device respectively displays the main interface of the shopping APP and a main interface of the video APP in the left split-screen window and the right split-screen window.

It needs to be noted that the solution of this application is not limited to using the application recommendation method provided in this application when the full-screen window is switched to the split-screen window. The application recommendation method provided in this application may alternatively be applied to another scenario. Several possible application scenarios are described below with reference to the accompanying drawings by using examples.

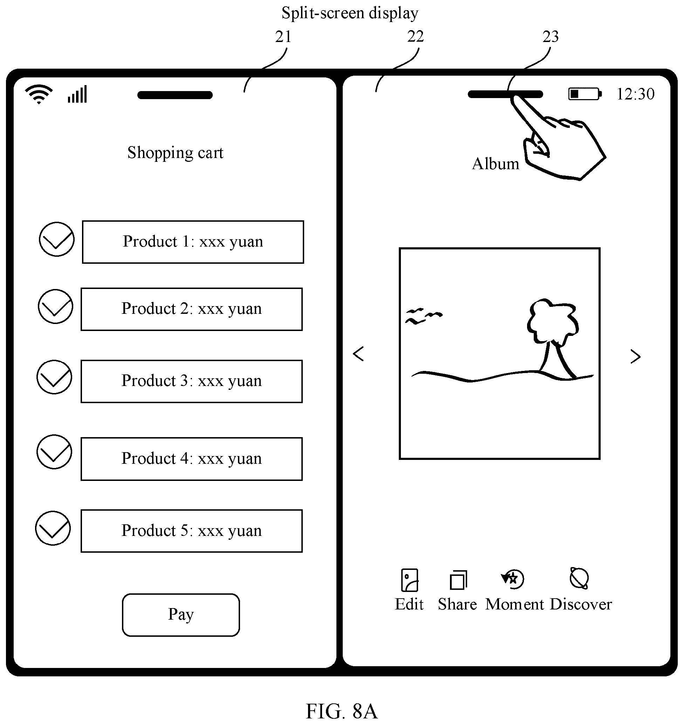

In some embodiments, the application recommendation method provided in the embodiments of this application may alternatively be applied to a scenario of replacing a split-screen window. For example, as shown in FIG. 8A, an electronic device respectively displays a shopping-cart interface 21 of a shopping APP and an interface 22 of an album APP in a left split-screen window and a right split-screen window.

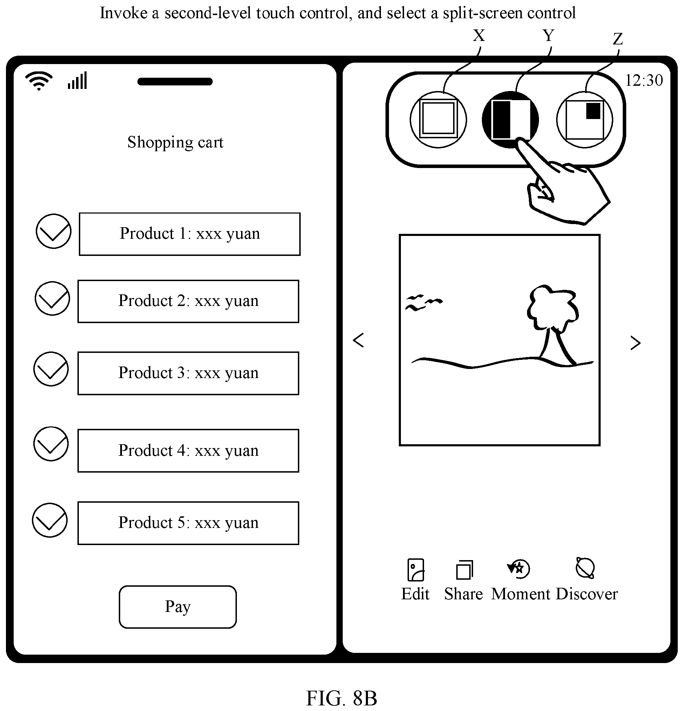

As shown in FIG. 8B, when the electronic device receives an operation of a user on a first-level touch control 23 in the right split-screen window, the electronic device invokes, in the right split-screen window, a plurality of controls for switching a display manner of the screen, such as a full-screen control X, a split-screen control Y, and a floating-window control Z.

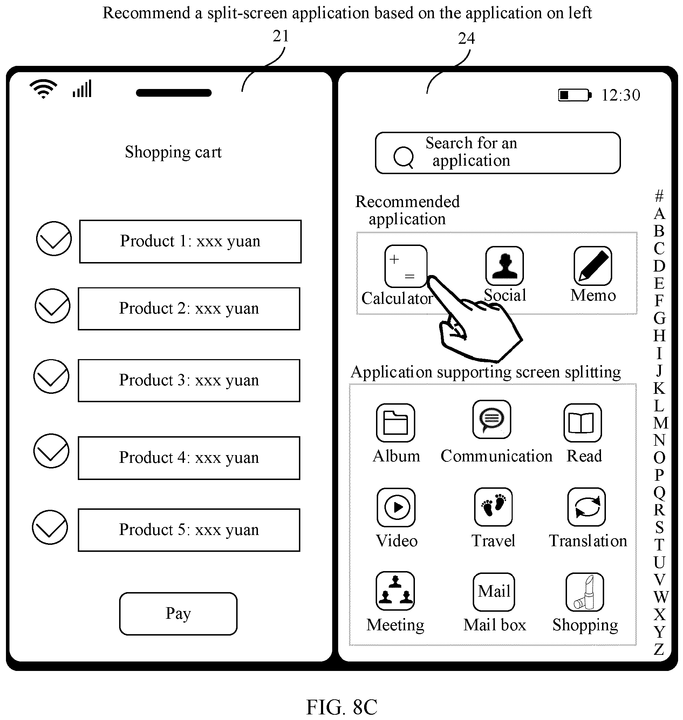

As shown in FIG. 8C, when the electronic device receives an operation of the user on the split-screen control Y, the electronic device may replace the right split-screen window with a split-screen recommendation interface 24 for display. A recommended application bar displays icons of a plurality of applications recommended based on the foregoing policy in this application. For example, the recommended application bar displays icons of a plurality of applications, such as a calculator APP, a social APP, and a memo APP, recommended based on the application (for example, the shopping-cart interface of the shopping APP) on the left.

It needs to be noted that the plurality of applications displayed in the recommended application bar are determined by using any application recommendation method provided in the foregoing embodiments of this application. For example, the shopping APP and the calculator APP may be a preset split-screen pair generated based on user historical behavior data. When screen splitting is triggered on the interface of the shopping APP, the calculator APP may be displayed in the recommended application bar in the split-screen recommendation interface, to facilitate the user to find an expected application to be displayed together with the foreground application through screen splitting. The recommended applications may be sequentially arranged in descending order of priorities.

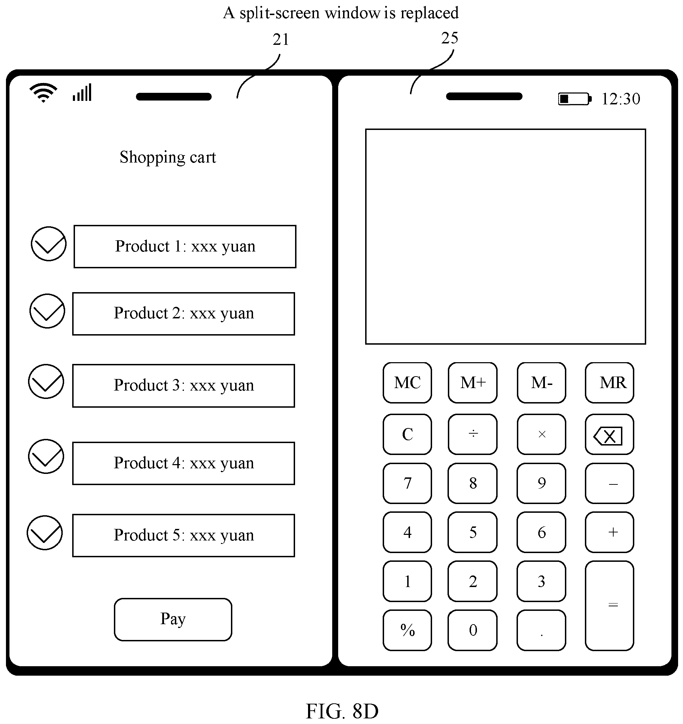

As shown in FIG. 8D, when the electronic device receives an operation of the user on a calculator APP, the electronic device respectively displays the shopping-cart interface 21 of the shopping APP and an interface 25 of the calculator APP in the left split-screen window and the right split-screen window.

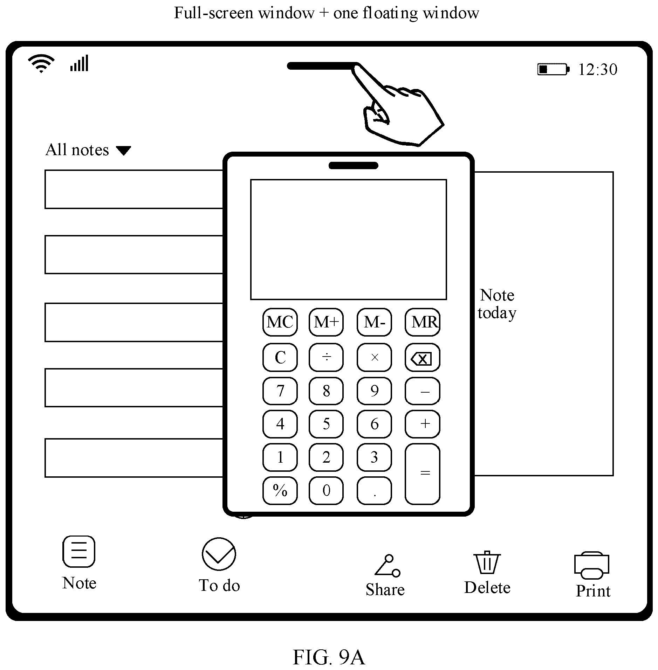

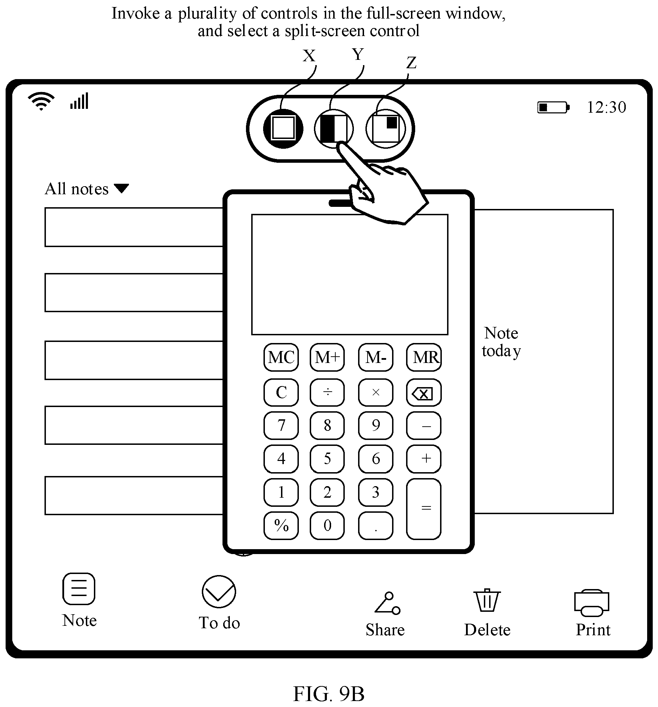

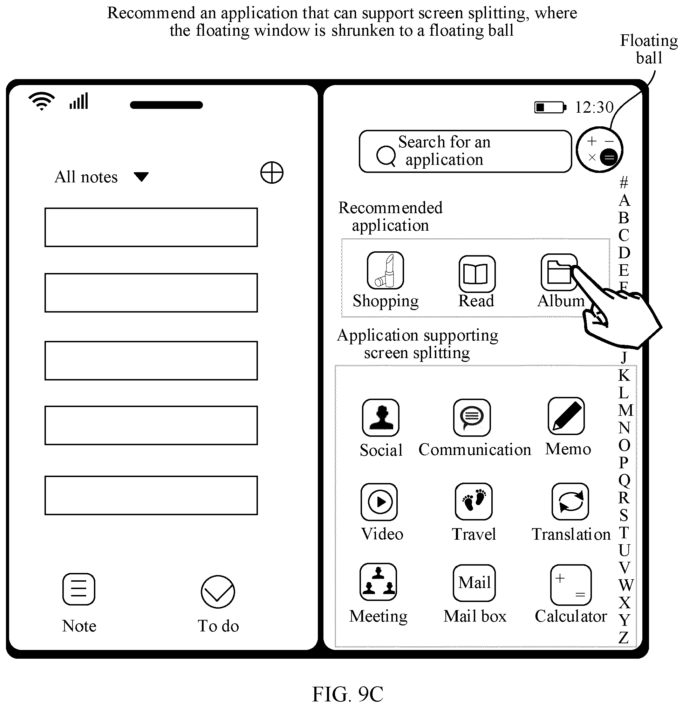

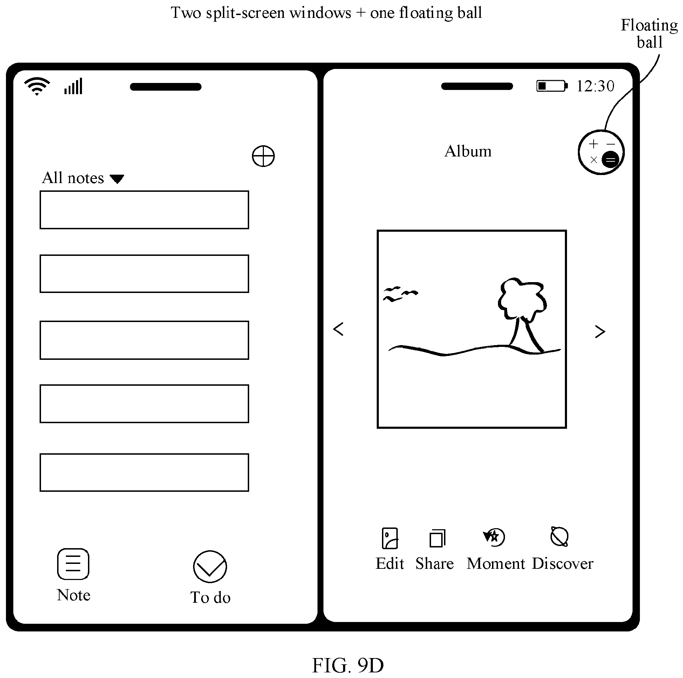

In some embodiments, the application recommendation method provided in the embodiments of this application may alternatively be applied to a scenario in FIG. 9. An interface interaction process of the application recommendation method during actual application is described below with reference to FIG. 9 by using an example.

As shown in FIG. 9A, a display screen of an electronic device displays a full-screen window, and displays a floating window in the full-screen window. As shown in FIG. 9B, when the electronic device receives an operation of a user on a bar icon in the full-screen window, the electronic device invokes a plurality of controls for switching a display manner, such as a full-screen control X, a split-screen control Y, and a floating-window control Z.

As shown in FIG. 9C, when the electronic device receives an operation of the user on the split-screen control Y, the electronic device may pop up a split-screen recommendation interface, and show, by using the split-screen recommendation interface, icons of a plurality of applications recommended based on the foregoing policy in this application and icons of a plurality of applications that can support screen splitting. At this time, the full-screen window may be shrunken into a split-screen window, and is displayed in parallel with the split-screen recommendation interface. In addition, the floating window is shrunken into a floating ball. For example, the floating ball may be displayed in an area close to a side edge of the display screen, so that the floating ball does not shield currently displayed content in the display screen.

Similarly, the plurality of applications displayed in the recommended application bar are determined by using any application recommendation method provided in the foregoing embodiments of this application. In addition, the recommended applications may be sequentially arranged in descending order of priorities.

When the electronic device receives an operation of the user on an application on the split-screen recommendation interface (for example, tapping an icon of an album application), as shown in FIG. 9D, the electronic device displays two split-screen windows. One split-screen window displays an interface of a note application, and the other split-screen window displays an interface of the album application. In this case, the floating ball remains to be displayed in the split-screen window.

Alternatively, the floating ball may support being dragged by the user to another area of the display screen. Optionally, the floating ball may support being triggered by the user to be enlarged into the floating window. Optionally, the floating ball may support being triggered by the user to be closed and no longer displayed.

According to the foregoing solution, in a scenario of the full-screen window + one floating window, when the user taps the split-screen control in the full-screen window, the electronic device may determine that the user has a screen splitting requirement, and then recommend an application supporting screen splitting, for the user to select. Once the user selects an application, the full-screen window is triggered to be switched to two split-screen windows (respectively displaying two application interfaces), and the floating window may be shrunken into the floating ball.

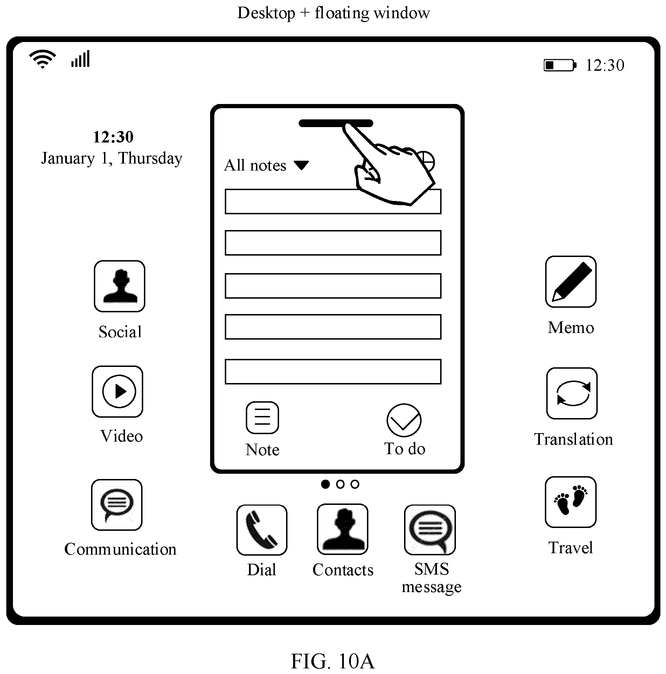

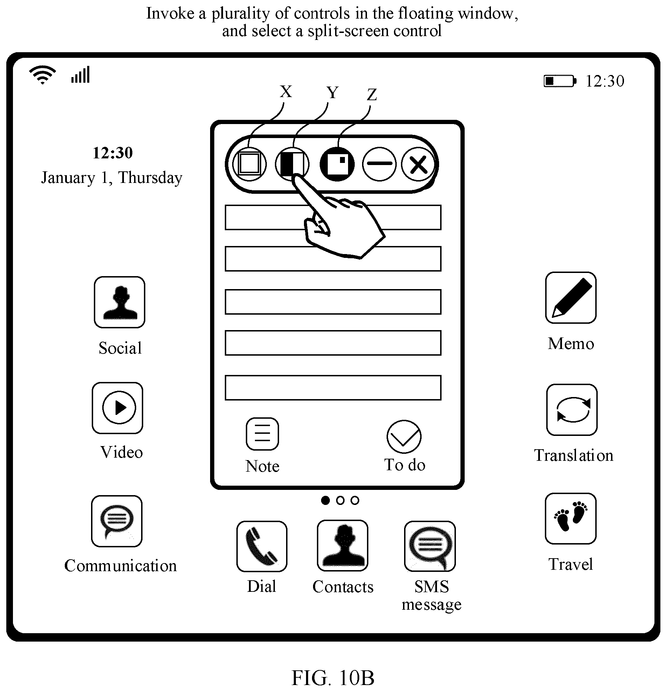

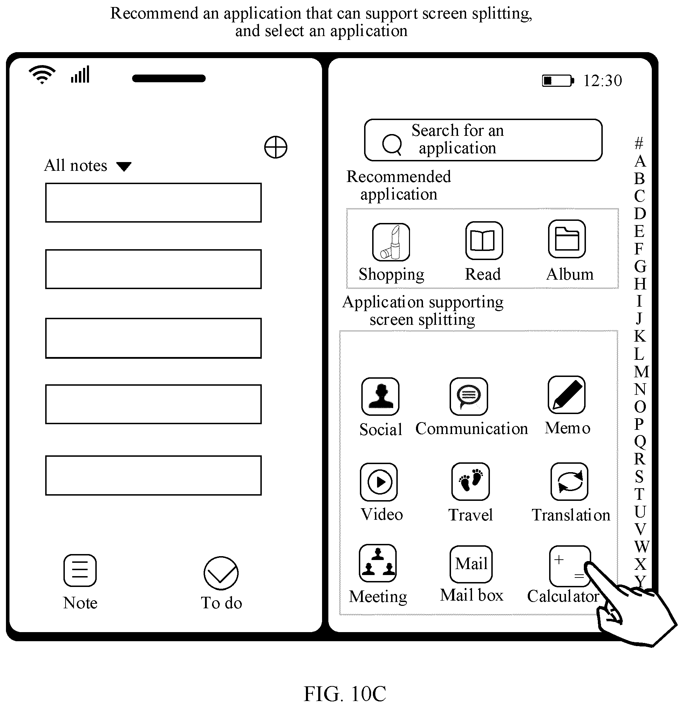

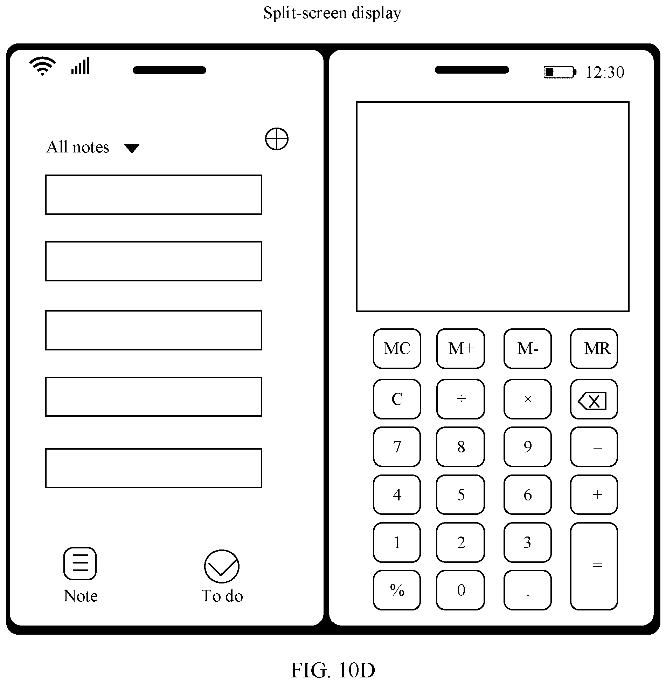

In some embodiments, the application recommendation method provided in the embodiments of this application may alternatively be applied to a scenario in FIG. 10. An interface interaction process of the application recommendation method during actual application is described below with reference to FIG. 10 by using an example.

As shown in FIG. 10A, a display screen of an electronic device displays a desktop interface, and displays a floating window on the desktop interface. As shown in FIG. 10B, when the electronic device receives an operation of a user on a bar icon in the floating window, the electronic device invokes a plurality of controls for switching a display manner, such as a full-screen control X, a split-screen control Y, and a floating-window control Z.

As shown in FIG. 10C, when the electronic device receives an operation of the user on the split-screen control Y, the electronic device may pop up a split-screen recommendation interface, and show, by using the split-screen recommendation interface, icons of a plurality of applications recommended based on the foregoing policy in this application and icons of a plurality of applications that can support screen splitting. In this case, the floating window may be changed to a split-screen window, and is displayed in parallel with the split-screen recommendation interface.

Similarly, the plurality of applications displayed in the recommended application bar are determined by using any application recommendation method provided in the foregoing embodiments of this application. In addition, the recommended applications may be sequentially arranged in descending order of priorities.

When the electronic device receives an operation of the user on an application on the split-screen recommendation interface (for example, tapping an icon of a calculator application), as shown in FIG. 10D, the electronic device displays two split-screen windows. One split-screen window displays an interface of a note application, and the other split-screen window displays an interface of the calculator application.

According to the foregoing solution, in a scenario of the desktop + one floating window, when the user taps the split-screen control in the floating window, the electronic device may determine that the user has a screen splitting requirement, and then recommend an application supporting screen splitting, for the user to select. Once the user selects an application, the display screen is triggered to switch from a display manner of a floating window to a split-screen display manner.

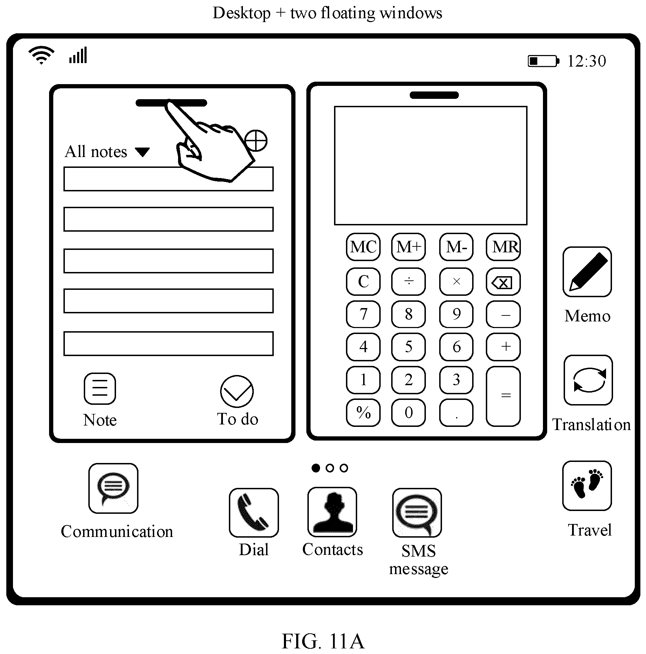

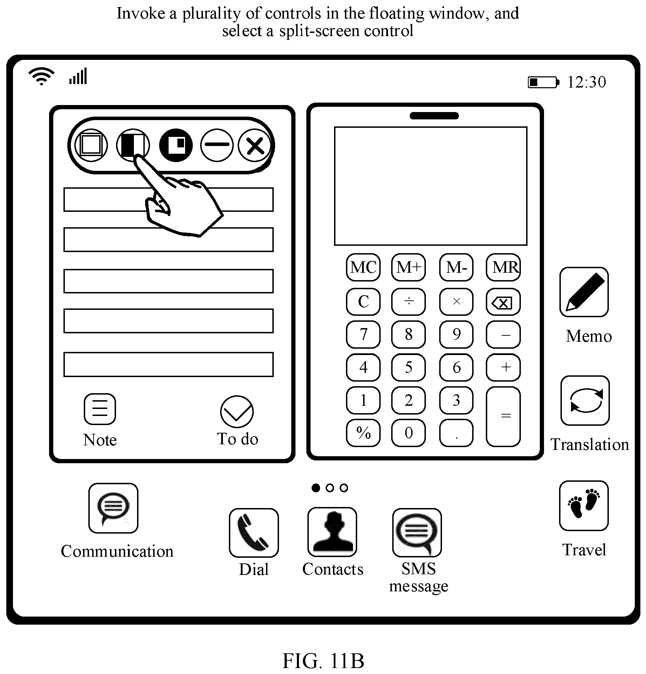

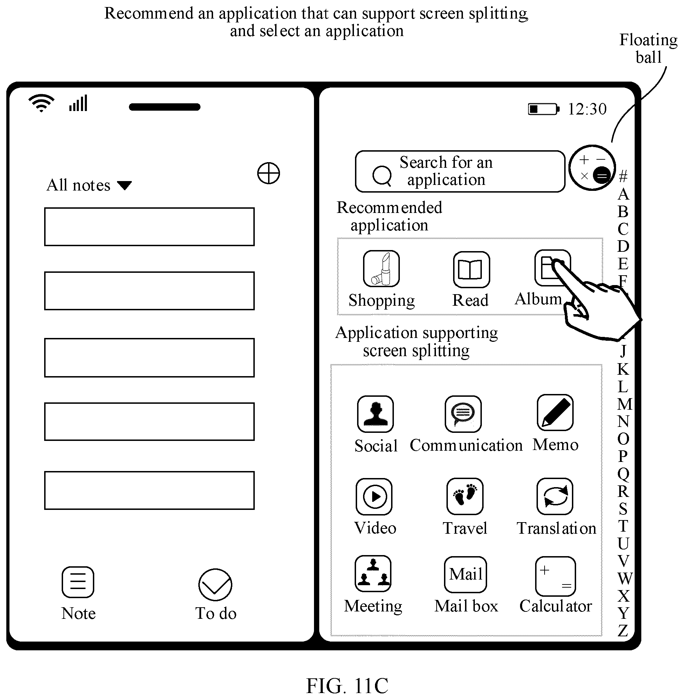

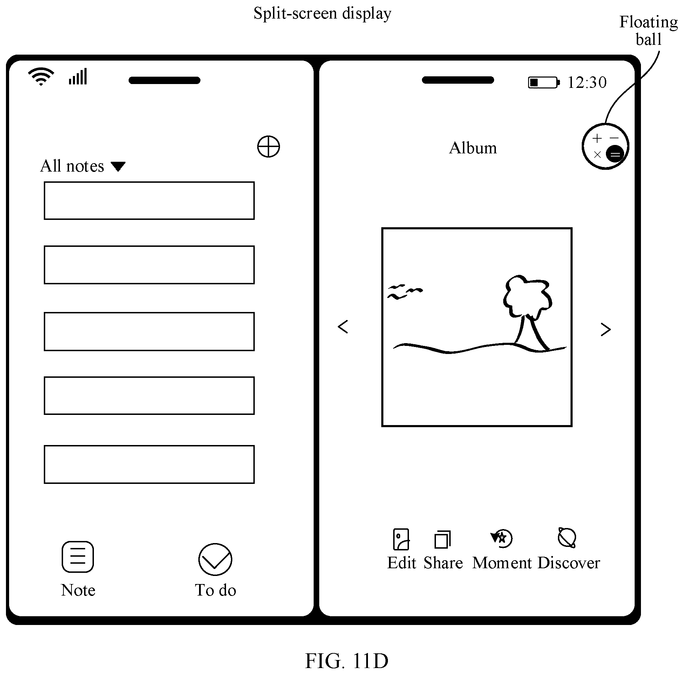

In some embodiments, the application recommendation method provided in the embodiments of this application may alternatively be applied to a scenario in FIG. 11. An interface interaction process of the application recommendation method during actual application is described below with reference to FIG. 11 by using an example.

As shown in FIG. 11A, a display screen of an electronic device displays a desktop interface, and displays two floating windows on the desktop interface. As shown in FIG. 11B, when the electronic device receives an operation of a user on a bar icon in one of the floating windows, the electronic device invokes a plurality of controls for switching a display manner, such as a full-screen control X, a split-screen control Y, and a floating-window control Z.

As shown in FIG. 11C, when the electronic device receives an operation of the user on the split-screen control Y, the electronic device may pop up a split-screen recommendation interface, and show, by using the split-screen recommendation interface, icons of a plurality of applications recommended based on the foregoing policy in this application and icons of a plurality of applications that can support screen splitting. In this case, the operated floating window may be changed to a split-screen window, and is displayed in parallel with the split-screen recommendation interface. In this case, the desktop interface is covered, and the floating window that is not operated becomes a floating ball. For example, the floating ball is displayed on a side.

Similarly, the plurality of applications displayed in the recommended application bar are determined by using any application recommendation method provided in the foregoing embodiments of this application. In addition, the recommended applications may be sequentially arranged in descending order of priorities.

When the electronic device receives an operation of the user on an application on the split-screen recommendation interface (for example, tapping an icon of a calculator application), as shown in FIG. 11D, the electronic device displays two split-screen windows. One split-screen window displays an interface of a note application, and the other split-screen window displays an interface of the calculator application.

According to the foregoing solution, in a scenario of the desktop + two floating windows, when the user taps the split-screen control in the floating window, the electronic device may determine that the user has a screen splitting requirement, and then recommend an application supporting screen splitting, for the user to select. Once the user selects an application, the display screen is triggered to switch from a display manner of a floating window to a split-screen display manner.

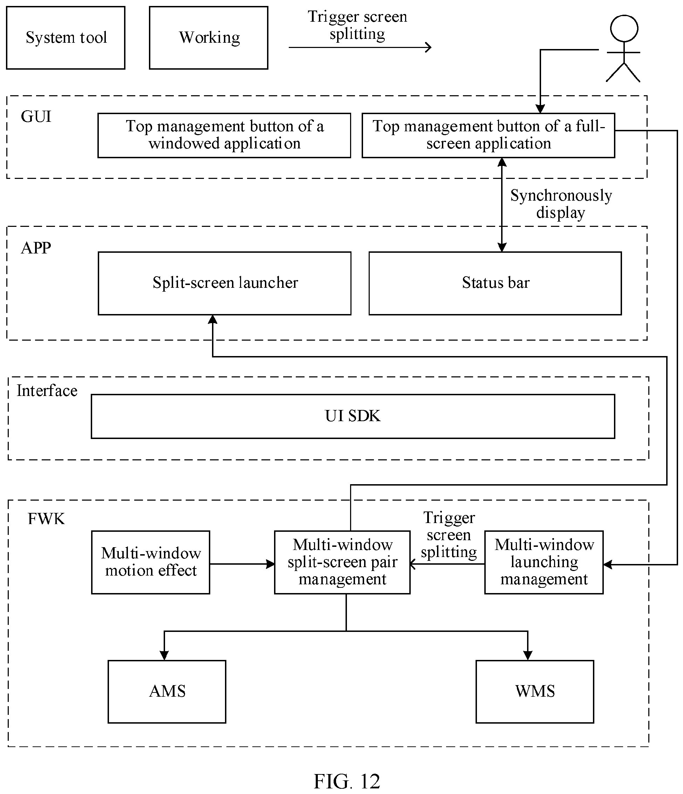

FIG. 12 is a schematic diagram of a system framework applied to an application recommendation method according to an embodiment of this application. The system framework may include a graphical user interface (graphical user interface, GUI) layer, an APP layer, an interface (interface) layer, and a framework (framework, FWK) layer. A window top management button is an entrance for exchanging a window form, and can be for providing a first-level touch control and a second-level touch control. A split-screen launcher is for starting a split-screen application. A UI SDK is a software interface, and can provide an application with a multi-window management framework capability. A multi-window motion effect module may be responsible for playing a motion effect after switching of a window is completed. A multi-window split-screen pair management module is responsible for managing a split screen and a split-screen pair, and floating window management. A multi-window launching management module is for managing starting of screen splitting.

The GUI layer may include a top management button of a windowed application and a top management button of a full-screen application. The APP layer may include the split-screen launcher and a status bar (status bar) application program. The top management button of the full-screen application and the status bar may be synchronously displayed. The interface layer includes a user interface (user interface, UI) software development kit (software development kit, SDK) module. The FWK layer may include the multi-window launching management module, the multi-window split-screen pair management module, the multi-window motion effect module, an activity manager service (activity manager service, AMS) module, and a window manager service (window manager service, WMS) module.

When the electronic device receives an operation of the user on the top management button (an association status bar button) of the full-screen application, the top management button of the full-screen application delivers split-screen indication information to the multi-window launching management module on the FWK layer, and then the multi-window launching management module invokes the multi-window split-screen pair management module to determine a split-screen pair. The multi-window split-screen pair management module reports the determined split-screen pair to the split-screen launcher, and the split-screen launcher implements a split-screen display function based on the split-screen pair.

The multi-window motion effect module on the FWK layer may provide a multi-window motion effect function for the multi-window split-screen pair management module. In addition, the multi-window split-screen pair management module may invoke services of the activity manager service (activity manager service, AMS) module and the window manager service (window manager service, WMS) module, to implement the split-screen display function.

It may be understood that the system architecture shown in FIG. 12 of the embodiments of this application does not constitute a particular limitation. In some other embodiments of this application, the system architecture may include more or fewer modules than shown in the figure, or some modules are combined, or some modules are split, or the modules are differently arranged.

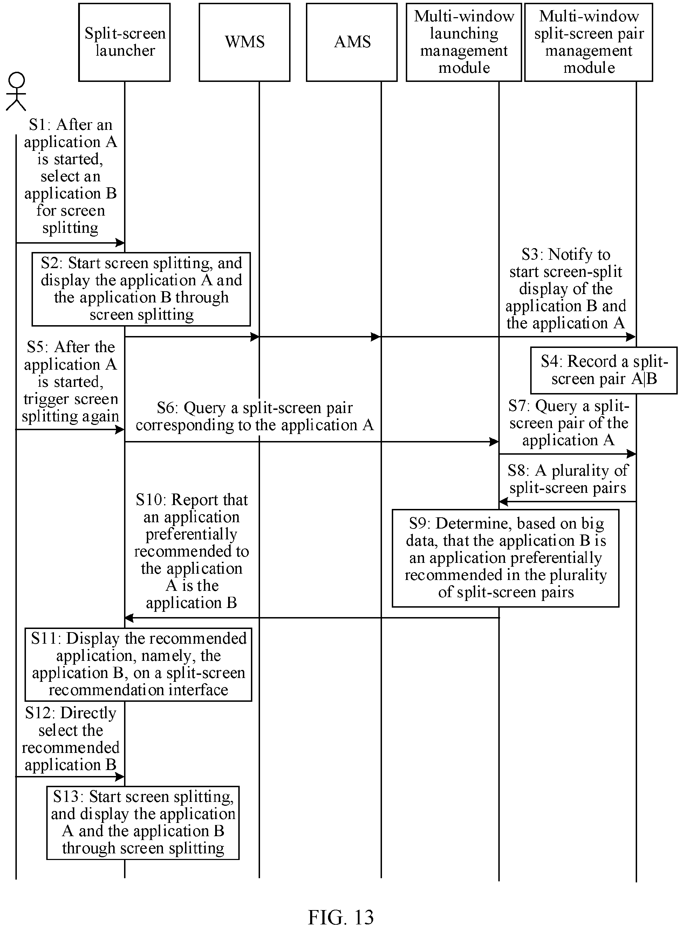

FIG. 13 is a schematic diagram of an interaction procedure between the modules shown in FIG. 12 in an application recommendation method according to an embodiment of this application. As shown in FIG. 13, the interaction procedure includes S1 to S13.

S1: In a case that an application A is started, an electronic device receives an operation of selecting an application B by the user to trigger screen splitting.

S2: In response to the operation of the user, the split-screen launcher starts a split-screen function, and displays the application A and the application B through screen splitting.

S3: The split-screen launcher sends, to the multi-window split-screen pair management module, a notification message: starting split-screen display of the application A and the application B. The notification message is transmitted to the multi-window split-screen pair management module via the WMS and the AMS.

S4: The multi-window split-screen pair management module records a split-screen pair A|B.

The multi-window split-screen pair management module may record content of a split-screen pair each time the split-screen pair is started. Alternatively, the multi-window split-screen pair management module may record the split-screen pair A|B in split-screen pair information in a case in which the split-screen display of the application A and the application B satisfies a condition (for example, an accumulated quantity of times or accumulated duration satisfies the condition), so that the recorded split-screen pair information is more accurate.

After steps S1 to S4 are performed for a plurality of times, the multi-window split-screen pair management module may record a plurality of split-screen pairs.

S5: The split-screen launcher again receives an operation of the user to trigger screen splitting after the application A is started.

S6: The split-screen launcher sends a query message to the multi-window launching management module, to query a split-screen pair corresponding to the application A.

S7: The multi-window launching management module delivers the query message to the multi-window split-screen pair management module.

S8: The multi-window split-screen pair management module reports the plurality of split-screen pairs corresponding to the application A to the multi-window launching management module.

The plurality of split-screen pairs include the split-screen pair A|B.

S9: After receiving the plurality of split-screen pairs that correspond to the application A and that are reported by the multi-window launching management module, the multi-window launching management module determines, based on big data, that the application B is a preferred recommended application in the plurality of split-screen pairs.

S10: The multi-window launching management module reports, to the split-screen launcher, a message: the preferred recommended application for the application A is the application B.

S11: After receiving the message reported by the multi-window launching management module, the split-screen launcher displays the recommended application: the application B (which is specifically an icon of the application B) on the split-screen recommendation interface.

S12: The split-screen launcher receives an operation of selecting the application B by the user.

S13: In response to the operation of the user, the split-screen launcher starts the split-screen function, and displays the application A and the application B through screen splitting.

In this embodiment of this application, a plurality of application split-screen pairs may be recorded based on application use data of the user. When the user starts the split-screen launcher next time, an application displayed with the foreground application in coordination through screen splitting may be recommended based on the application split-screen pair. The recommended application is then shown in a recommended application area of the split-screen launcher.

Because the recommended application is an application that is highly related to the foreground application, in other words, an application that is accustomed or expected by the user to be displayed with the foreground application in coordination through screen splitting is included, it is convenient for the user to quickly find an application for which a screen is to be split. In the solution of this application, the scenario requirement of the user for quickly finding the application for coordinate screen splitting with the foreground application can be satisfied, so that convenience of using the split-screen function by the user is greatly improved.

It should also be noted that, in the embodiments of this application, "greater than" may be replaced with "greater than or equal to", and "less than or equal to" may be replaced with "less than"; or "greater than or equal to" may be replaced with "greater than", and "less than" may be replaced with "less than or equal to".

Various embodiments described in this specification may be independent solutions, or may be combined based on inner logic, all of which fall within the scope of this application.

It may be understood that the methods and operations implemented by the electronic device in the foregoing method embodiments may also be implemented by a component (for example, a chip or a circuit) that can be used in the electronic device.

The method embodiments provided in this application are described above, and apparatus embodiments provided in this application are described below. It should be understood that descriptions of the apparatus embodiments correspond to the descriptions of the method embodiments. Therefore, for content that is not described in detail, refer to the method embodiments. Details are not described herein again for brevity.

The solutions provided in the embodiments of this application are described above mainly from a perspective of method steps. It may be understood that to implement the foregoing functions, the electronic device implementing the method includes a corresponding hardware structure and/or software module for performing each function. A person skilled in the art may realize that this application may be implemented in hardware or a combination of hardware and computer software with reference to the units and algorithm steps in the examples described in the embodiments disclosed in this specification. Whether a function is implemented by hardware or computer software driving hardware depends upon a particular application and design constraint of the technical solution. A person skilled in the art may implement the described function by using different methods for each particular application, but such implementation should not be considered to go beyond the scope of this application.

In the embodiments of this application, division on functional modules of the electronic device may be performed based on the method examples. For example, the functional modules may be correspondingly divided for each function, or two or more functions may be integrated in one processing module. The integrated module may be implemented in a form of hardware or in a form of a software functional module. It should be noted that the division on the modules in the embodiments of this application is illustrative and is merely logical functional division. During actual implementation, there may be another division manner. Descriptions are provided below by using an example in which the functional modules are correspondingly divided for each function.

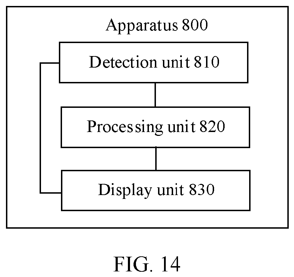

FIG. 14 is a schematic block diagram of an application recommendation apparatus 800 according to an embodiment of this application. The apparatus 800 may be configured to perform actions performed by the electronic device in the foregoing method embodiments. The apparatus 800 includes a detection unit 810, a processing unit 820, and a display unit 830.

The detection unit 810 is configured to receive a split-screen operation of a user when the display unit 820 displays a first interface of a first application.

The processing unit 820 is configured to: in response to the split-screen operation, indicate the display unit 830 to simultaneously display the first interface and a split-screen recommendation interface.

The display unit 830 is configured to display, based on an indication of the processing unit 820, the first interface and a split-screen recommendation interface. The split-screen recommendation interface includes a search bar, a recommended application bar, and a bar of an application supporting screen splitting. The search bar is for searching for an application supporting screen splitting. The recommended application bar is for showing an application that is intelligently recommended based on a scenario and that supports screen splitting. The bar of the application supporting screen splitting is for showing all or a part of applications supporting screen splitting in an electronic device.

In a first scenario, the recommended application bar displays an application in a first set. In a second scenario, the recommended application bar displays an application in a second set. The application in the first set and the application in the second set are completely or partially different. The first interface is an interface of the first application, and the first application is an application supporting screen splitting.

The detection unit 810 is further configured to receive a selection operation of the user on an icon of a second application in the split-screen recommendation interface.

The processing unit 820 is further configured to: in response to the selection operation, indicate the display unit 820 to display the first interface and the second interface through screen splitting.

The display unit 830 is further configured to switch, based on an indication of the processing unit 820, from simultaneously displaying the first interface and the split-screen recommendation interface to displaying the first interface and a second interface through screen splitting. The second interface is an interface of the second application.

According to the solution of this application, an association relationship between applications with high relevance may be established based on user behavior data, to form split-screen pair information. When a user triggers screen splitting on an interface of an application, the electronic device may display a split-screen recommender, to recommend, to the user based on the split-screen pair information, one or more applications related to a foreground application, for the user to select. Because the recommended application is an application that is highly related to the foreground application, in other words, an application that is accustomed or expected by the user to be displayed with the foreground application in coordination through screen splitting is included, it is convenient for the user to quickly find an application for which a screen is to be split. In the solution of this application, the scenario requirement of the user for quickly finding the application for coordinate screen splitting with the foreground application can be satisfied, so that convenience of using the split-screen function by the user is greatly improved.

The apparatus 800 in this embodiment of this application may correspondingly perform the method described in the embodiments of this application, and the foregoing and other operations and/or functions of the units in the apparatus 800 are respectively for realizing the corresponding procedures of the method. For brevity, details are not described herein again.

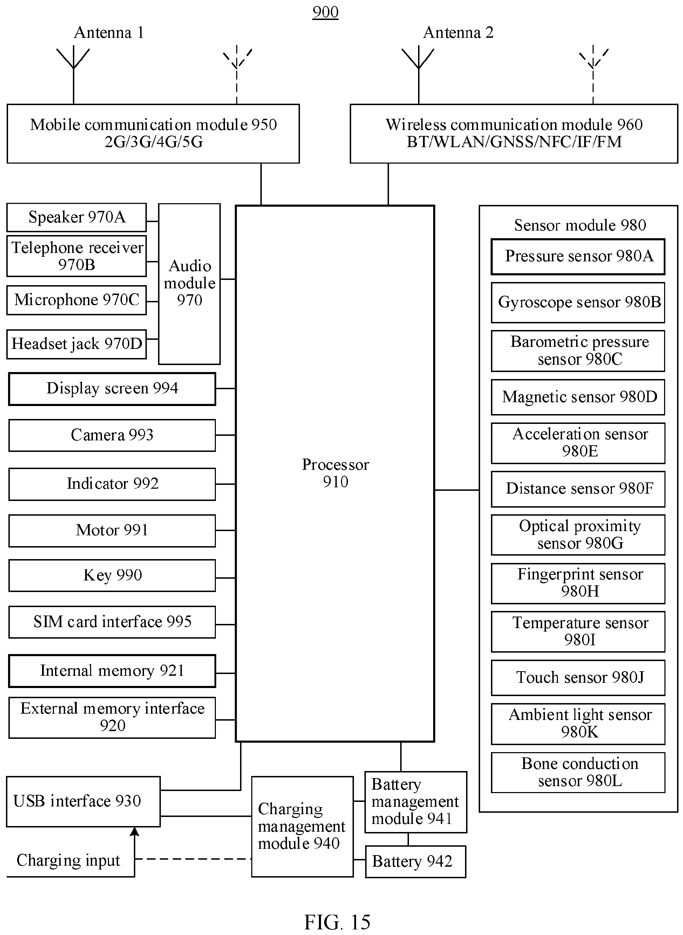

FIG. 15 is a schematic structural diagram of an electronic device 900 according to an embodiment of this application. The electronic device 900 may include a processor 910, an external memory interface 920, an internal memory 921, a universal serial bus (universal serial bus, USB) interface 930, a charging management module 940, a power management unit 941, a battery 942, an antenna 1, an antenna 2, a mobile communication module 950, a wireless communication module 960, an audio module 970, a speaker 970A, a telephone receiver 970B, a microphone 970C, a headset jack 970D, a sensor module 980, a key 990, a motor 991, an indicator 992, a camera 993, a display screen 994, a subscriber identification module (subscriber identification module, SIM) card interface 995, and the like. The sensor module 980 may include a pressure sensor 980A, a gyroscope sensor 980B, a barometric pressure sensor 980C, a magnetic sensor 980D, an acceleration sensor 980E, a distance sensor 980F, an optical proximity sensor 980G, a fingerprint sensor 980H, a temperature sensor 980I, a touch sensor 980J, an ambient light sensor 980K, and a bone conduction sensor 980L, and the like.

It may be understood that the structure shown in this embodiment of this application does not constitute a particular limitation on the electronic device 900. In some other embodiments of this application, the electronic device 900 may include more or fewer components than shown in the figure, or some components are combined, or some components are split, or the components are differently arranged. The components shown in the figure may be implemented in hardware, software, or a combination of software and hardware.

It should be understood that the electronic device 900 shown in FIG. 15 may correspond to the device 800 shown in FIG. 14. The processor 910, the display screen 994, and the pressure sensor 980A in the electronic device 900 shown in FIG. 15 may correspond to the processing unit 820, the display unit 830, the detection unit 810 in the apparatus 800 in FIG. 14 respectively.

During actual implementation, when the electronic device 900 runs, the processor 910 executes computer-executable instructions in the memory 921 to perform the operation steps of the method by using the electronic device 900.

Optionally, in some embodiments, this application provides a chip, coupled with a memory. The chip is configured to read and execute a computer program or instructions stored in the memory to perform the method in each of the foregoing embodiments.

Optionally, in some embodiments, this application provides an electronic device, including a chip. The chip is for reading and executing a computer program or instructions stored in a memory, so that the method in each of the foregoing embodiments is implemented.

Optionally, in some embodiments, the embodiments of this application further provide a computer-readable storage medium. The computer-readable storage medium stores program code. When the computer program code is run on a computer, the computer is enabled to perform the method in each of the foregoing embodiments.

Optionally, in some embodiments, the embodiments of this application further provide a computer program product. The computer program product includes computer program code. When the computer program code is run on a computer, the computer is enabled to perform the method in each of the foregoing embodiments.

In the embodiments of this application, the electronic device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system on the operating system layer may be any one or more computer operating systems that implement business processing through a process (process), for example, a Linux operating system, a Unix operating system, an Android operating system, an iOS operating system, or a Windows operating system. The application layer may include applications such as a browser, contacts, word processing software, instant messaging software, and the like.

The embodiments of this application do not particularly limit a specific structure of an execution body of the method provided in the embodiments of this application, provided that communication can be performed based on the method provided in the embodiments of this application by running a program recording code of the method provided in the embodiments of this application. For example, the execution body of the method provided in the embodiments of this application may be an electronic device, or a functional module capable of invoking a program and executing the program in the electronic device.

Various aspects or features of this application may be implemented as a method, an apparatus, or a product using standard programming and/or engineering technologies. The term "product" used in this specification may encompass a computer program that can be accessed from any computer-readable device, carrier, or medium. For example, the computer-readable medium may include, but is not limited to, a magnetic storage device (for example, a hard disk, a floppy disk, or a magnetic tape), an optical disk (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key driver).

Unless otherwise defined, all technical and scientific terms used in this specification have same meanings as those commonly understood by a person skilled in the art belonging to this application. Terms used in this specification of this application in this specification are only intended to describe specific embodiments, and are not intended to limit this application.

## Claims

1. An application recommendation method, comprising:
displaying a desktop interface, wherein a first floating window and a second floating window are displayed on the desktop, an interface of a first application is displayed in the first floating window, and an interface of a second application is displayed in the second floating window;
receiving a first split-screen operation in the first floating window;
in response to the first split-screen operation, the first floating window is changed to a first split-screen window, and simultaneously displaying a first split-screen recommendation interface in a second split-screen window, wherein the first split-screen recommendation interface comprises a search bar, a recommended application bar, and a bar of an application supporting screen splitting, the search bar is for searching for an application supporting screen splitting, the recommended application bar is for showing one or more recommended applications to a user for split-screen display, and the bar of the application supporting screen splitting is for showing all or a part of applications supporting screen splitting in an electronic device;
when simultaneously displaying the first split-screen window and the second split-screen window, displaying a floating ball on the second split-screen window in an area close to a side edge of the display screen, wherein the floating ball is formed by reducing the second floating window;
after displaying the first split-screen recommendation interface in a second split-screen window, the method further comprising: receiving a first selection operation on an icon of a third application in the first split-screen recommendation interface;
in response to the first selection operation, an interface of the first application is continuously displayed in the split-screen first window, and the first split-screen recommendation interface is changed to an interface of the third application in the second split-screen window;
wherein during the process of the first split-screen recommendation interface is changed to an interface of the third application in the second split-screen window, the floating ball continues to be displayed on the first split-screen window or the second split-screen window.

2. The method according to claim 1, wherein
the icon of a third application is displayed in the recommended application bar; or,
the icon of a third application is displayed in the bar of an application supporting screen splitting.

3. The method according to claim 1, wherein after displaying the first split-screen recommendation interface in a second split-screen window, the method further comprising:
when a keyword of an application is entered in the search bar, an icon of a searched application is displayed in the first split-screen recommendation interface;
when the icon of the searched application is tapped, the first split-screen recommendation interface is changed to an interface of the searched application in the second split-screen window;
wherein during the process of the first split-screen recommendation interface is changed to an interface of the searched application in the second split-screen window, the floating ball continues to be displayed on the first split-screen window or the second split-screen window.

4. The method according to any one of claims 1 to 3, wherein the method further comprises:
determining the application in the recommended application bar based on a scenario parameter corresponding to a first scenario; or
determining the application in a second recommended application bar based on a scenario parameter corresponding to a second scenario, wherein
the scenario parameter corresponding to the first scenario comprises at least one of the following: schedule information, time information, position information, and network information, and the schedule information is meeting information, air ticket information, ticket information, or accommodation information.

5. The method according to claim 4, wherein the determining the application in the recommended application bar based on a scenario parameter corresponding to the first scenario comprises:
if system time is within a time period indicated by the schedule information, and/or a position of the electronic device is within a position range indicated by the schedule information, determining, as a recommended split-screen application, a preset associated application corresponding to the schedule information, wherein the recommended application bar comprises the recommended split-screen application.

6. The method according to claim 5, wherein the method further comprises:
obtaining the schedule information based on user behavior information stored in the electronic device, and determining, based on the schedule information and a first correspondence relationship, the preset associated application corresponding to the schedule information, wherein the first correspondence relationship is a correspondence relationship that is pre-stored in the electronic device and that is between different schedule information and preset associated applications, and the preset associated application corresponding to the schedule information is a meeting-type application, a trip-type application, a traffic-type application, a travel-type application, or a navigation-type application; or
determining, based on user historical behavior data or user big data, preset split-screen pair information corresponding to the first scenario, and determining, based on the preset split-screen pair information corresponding to the first scenario, a recommended split-screen application corresponding to the first scenario.

7. The method according to claim 6, wherein the determining, based on user historical behavior data or user big data, preset split-screen pair information corresponding to the first scenario comprises:
if a frequency of successively starting two applications within a first time period is greater than or equal to a preset frequency, recording first split-screen pair information corresponding to the first scenario, wherein the first split-screen pair information comprises a split-screen pair comprising the two applications, and information about the first time period; and/or
if a frequency of successively starting two applications within a first time period and within a first position range is greater than or equal to a preset frequency, recording first split-screen pair information corresponding to the first scenario, wherein the first split-screen pair information comprises a split-screen pair comprising the two applications, information about the first time period, and first position information; and/or
if accumulated duration of displaying two applications in a split-screen manner is greater than or equal to preset duration, or if a frequency of displaying two applications in a split-screen manner is greater than or equal to a first preset frequency, recording first split-screen pair information corresponding to the first scenario, wherein the first split-screen pair information comprises a split-screen pair comprising the two applications; and/or
if a frequency of frequently switching display of two applications is greater than or equal to a second preset frequency, recording first split-screen pair information corresponding to the first scenario, wherein the first split-screen pair information comprises a split-screen pair comprising the two applications.

8. The method according to any one of claims 1 to 7, wherein the method further comprises:
determining M recommended split-screen applications according to a first recommendation rule;
determining N recommended split-screen applications according to a second recommendation rule; and
sequentially displaying the M recommended split-screen applications and the N recommended split-screen applications in the recommended application bar in descending order of priorities, wherein
a priority of the first recommendation rule is higher than a priority of the second recommendation rule.

9. The method according to any one of claims 1 to 8, wherein a first-level touch control is displayed on the first floating window, and the first-level touch control is for representing a control that switches a screen display form;
the receiving a first split-screen operation comprises: receiving, by the electronic device, an operation of the user on the first-level touch control; displaying, by the electronic device, a second-level touch control, wherein the second-level touch control comprises a split-screen control; and receiving, by the electronic device, an operation of the user on the split-screen control, wherein the split-screen control is for triggering a display screen of the electronic device to display interfaces of different applications in a plurality of windows.

10. The method according to any one of claims 1 to 9, wherein simultaneously displaying the first split-screen window and the second split-screen window comprises:
displaying the first split-screen window and the second split-screen window in a left-and-right split-screen display manner; or
displaying the first split-screen window and the second split-screen window in an up-and-down split-screen display manner.

11. The method according to any one of claims 1 to 10, wherein
the floating ball supports being dragged by the user to another area of the display screen; or
the floating ball supports being triggered by the user to be enlarged into the floating window; or
the floating ball supports being triggered by the user to be closed and no longer displayed.

12. The method according to any one of claims 1 to 11, wherein the recommended application bar comprises icons of one or more applications usually used by the user within a recent time period.

13. An electronic device (900), comprising a processor (910), wherein the processor is coupled with a memory (921), and the processor is configured to execute a computer program or instructions stored in the memory, to enable the electronic device to implement the method according to any one of claims 1 to 12.

14. The electronic device according to claim 13, wherein the electronic device includes a foldable screen.

## Patentansprüche

1. Verfahren zur Anwendungsempfehlung, umfassend:
Anzeigen einer Desktop-Oberfläche, wobei ein erstes schwebendes Fenster und ein zweites schwebendes Fenster auf dem Desktop angezeigt werden, wobei eine Schnittstelle einer ersten Anwendung im ersten schwebenden Fenster angezeigt wird und eine Schnittstelle einer zweiten Anwendung im zweiten schwebenden Fenster angezeigt wird;
Empfangen einer ersten Split-Screen-Operation im ersten schwebenden Fenster;
als Reaktion auf die erste Split-Screen-Operation wird das erste schwebende Fenster in ein erstes Split-Screen-Fenster umgewandelt, und gleichzeitig wird eine erste Split-Screen-Empfehlungsoberfläche in einem zweiten Split-Screen-Fenster angezeigt, wobei die erste Split-Screen-Empfehlungsoberfläche eine Suchleiste, eine Leiste für empfohlene Anwendungen und eine Leiste für Anwendungen umfasst, die Bildschirmteilung unterstützen, wobei die Suchleiste zum Suchen nach einer Anwendung dient, die Bildschirmteilung unterstützt, die Leiste für empfohlene Anwendungen dazu dient, einem Benutzer eine oder mehrere empfohlene Anwendungen für die Split-Screen-Anzeige zu zeigen, und die Leiste für Anwendungen, die Bildschirmteilung unterstützen, dazu dient, alle oder einen Teil der Anwendungen anzuzeigen, die Bildschirmteilung auf einem elektronischen Gerät unterstützen;
beim gleichzeitigen Anzeigen des ersten Split-Screen-Fensters und des zweiten Split-Screen-Fensters, Anzeigen einer schwebenden Kugel auf dem zweiten Split-Screen-Fenster in einem Bereich nahe einer Seitenkante des Anzeigebildschirms, wobei die schwebende Kugel durch Verkleinerung des zweiten schwebenden Fensters gebildet wird;
nach dem Anzeigen der ersten Split-Screen-Empfehlungsoberfläche in einem zweiten Split-Screen-Fenster, wobei das Verfahren ferner umfasst: Empfangen einer ersten Auswahloperation auf einem Symbol einer dritten Anwendung in der ersten Split-Screen-Empfehlungsoberfläche;
als Reaktion auf die erste Auswahloperation wird eine Schnittstelle der ersten Anwendung kontinuierlich im ersten Split-Screen-Fenster angezeigt, und die erste Split-Screen-Empfehlungsoberfläche wird in eine Schnittstelle der dritten Anwendung im zweiten Split-Screen-Fenster geändert;
wobei während des Prozesses, in dem die erste Split-Screen-Empfehlungsoberfläche in eine Schnittstelle der dritten Anwendung im zweiten Split-Screen-Fenster geändert wird, die schwebende Kugel weiterhin auf dem ersten Split-Screen-Fenster oder dem zweiten Split-Screen-Fenster angezeigt wird.

2. Verfahren nach Anspruch 1, wobei
das Symbol einer dritten Anwendung in der Leiste für empfohlene Anwendungen angezeigt wird; oder,
das Symbol einer dritten Anwendung in der Leiste für Anwendungen, die Bildschirmteilung unterstützen, angezeigt wird.

3. Verfahren nach Anspruch 1, wobei das Verfahren nach dem Anzeigen der ersten Split-Screen-Empfehlungsoberfläche in einem zweiten Split-Screen-Fenster ferner umfasst:
wenn ein Schlüsselwort einer Anwendung in die Suchleiste eingegeben wird, wird ein Symbol einer gesuchten Anwendung in der ersten Split-Screen-Empfehlungsoberfläche angezeigt;
wenn auf das Symbol der gesuchten Anwendung getippt wird, wird die erste Split-Screen-Empfehlungsoberfläche in eine Oberfläche der gesuchten Anwendung im zweiten Split-Screen-Fenster geändert;
wobei während des Vorgangs, bei dem die erste Split-Screen-Empfehlungsoberfläche in eine Oberfläche der gesuchten Anwendung im zweiten Split-Screen-Fenster geändert wird, die schwebende Kugel weiterhin auf dem ersten Split-Screen-Fenster oder dem zweiten Split-Screen-Fenster angezeigt wird.

4. Verfahren nach einem der Ansprüche 1 bis 3, wobei das Verfahren ferner umfasst:
Bestimmen der Anwendung in der empfohlenen Anwendungsleiste basierend auf einem Szenarioparameter, der einem ersten Szenario entspricht; oder
Bestimmen der Anwendung in einer zweiten empfohlenen Anwendungsleiste basierend auf einem Szenarioparameter, der einem zweiten Szenario entspricht, wobei
der dem ersten Szenario entsprechende Szenarioparameter mindestens eines der Folgenden umfasst: Terminplaninformationen, Zeitinformationen, Positionsinformationen und Netzwerkinformationen, und die Terminplaninformationen Besprechungsinformationen, Flugticketinformationen, Ticketinformationen oder Unterkunftsinformationen sind.

5. Verfahren nach Anspruch 4, wobei das Bestimmen der Anwendung in der empfohlenen Anwendungsleiste basierend auf einem dem ersten Szenario entsprechenden Szenarioparameter umfasst:
wenn die Systemzeit innerhalb eines durch die Terminplaninformationen angegebenen Zeitraums liegt und/oder sich eine Position der elektronischen Vorrichtung innerhalb eines durch die Terminplaninformationen angegebenen Positionsbereichs befindet, Bestimmen einer voreingestellten zugehörigen Anwendung, die den Terminplaninformationen entspricht, als empfohlene Split-Screen-Anwendung, wobei die empfohlene Anwendungsleiste die empfohlene Split-Screen-Anwendung umfasst.

6. Verfahren nach Anspruch 5, wobei das Verfahren ferner umfasst:
Abrufen der Terminplaninformationen basierend auf in der elektronischen Vorrichtung gespeicherten Benutzerverhaltensinformationen und Bestimmen der voreingestellten zugehörigen Anwendung, die den Terminplaninformationen entspricht, basierend auf den Terminplaninformationen und einer ersten Korrespondenzbeziehung, wobei die erste Korrespondenzbeziehung eine in der elektronischen Vorrichtung vorab gespeicherte Korrespondenzbeziehung zwischen verschiedenen Terminplaninformationen und voreingestellten zugehörigen Anwendungen ist, und die den Terminplaninformationen entsprechende voreingestellte zugehörige Anwendung eine Anwendung vom Typ Besprechung, eine Anwendung vom Typ Reise, eine Anwendung vom Typ Verkehr, eine Anwendung vom Typ Ausflug oder eine Anwendung vom Typ Navigation ist; oder
Bestimmung vordefinierter Split-Screen-Paar-Informationen, die dem ersten Szenario entsprechen, basierend auf historischen Benutzerverhaltensdaten oder Benutzer-Big-Data, und Bestimmung einer empfohlenen Split-Screen-Anwendung, die dem ersten Szenario entspricht, basierend auf den vordefinierten Split-Screen-Paar-Informationen, die dem ersten Szenario entsprechen.

7. Verfahren nach Anspruch 6, wobei das Bestimmen der dem ersten Szenario entsprechenden vordefinierten Split-Screen-Paar-Informationen basierend auf historischen Benutzerverhaltensdaten oder Benutzer-Big-Data umfasst:
wenn eine Häufigkeit des aufeinanderfolgenden Startens zweier Anwendungen innerhalb eines ersten Zeitraums größer oder gleich einer vordefinierten Häufigkeit ist, Aufzeichnen erster Split-Screen-Paar-Informationen, die dem ersten Szenario entsprechen, wobei die ersten Split-Screen-Paar-Informationen ein Split-Screen-Paar, das die zwei Anwendungen umfasst, sowie Informationen über den ersten Zeitraum umfassen; und/oder
wenn eine Häufigkeit des aufeinanderfolgenden Startens zweier Anwendungen innerhalb eines ersten Zeitraums und innerhalb eines ersten Positionsbereichs größer oder gleich einer vordefinierten Häufigkeit ist, Aufzeichnen erster Split-Screen-Paar-Informationen, die dem ersten Szenario entsprechen, wobei die ersten Split-Screen-Paar-Informationen ein Split-Screen-Paar, das die zwei Anwendungen umfasst, Informationen über den ersten Zeitraum sowie erste Positionsinformationen umfassen; und/oder
wenn eine akkumulierte Dauer der Anzeige zweier Anwendungen im Split-Screen-Modus größer oder gleich einer vordefinierten Dauer ist, oder wenn eine Häufigkeit der Anzeige zweier Anwendungen im Split-Screen-Modus größer oder gleich einer ersten vordefinierten Häufigkeit ist, Aufzeichnen erster Split-Screen-Paar-Informationen, die dem ersten Szenario entsprechen, wobei die ersten Split-Screen-Paar-Informationen ein Split-Screen-Paar, das die zwei Anwendungen umfasst, umfassen; und/oder
wenn eine Häufigkeit des häufigen Umschaltens der Anzeige zweier Anwendungen größer oder gleich einer zweiten vordefinierten Häufigkeit ist, Aufzeichnen erster Split-Screen-Paar-Informationen, die dem ersten Szenario entsprechen, wobei die ersten Split-Screen-Paar-Informationen ein Split-Screen-Paar, das die zwei Anwendungen umfasst, umfassen.

8. Verfahren nach einem der Ansprüche 1 bis 7, wobei das Verfahren ferner umfasst:
Bestimmung von M empfohlenen Split-Screen-Anwendungen gemäß einer ersten Empfehlungsregel;
Bestimmung von N empfohlenen Split-Screen-Anwendungen gemäß einer zweiten Empfehlungsregel; und
sequenzielles Anzeigen der M empfohlenen Split-Screen-Anwendungen und der N empfohlenen Split-Screen-Anwendungen in der Empfehlungsanwendungsleiste in absteigender Reihenfolge der Prioritäten, wobei
eine Priorität der ersten Empfehlungsregel höher ist als eine Priorität der zweiten Empfehlungsregel.

9. Verfahren nach einem der Ansprüche 1 bis 8, wobei auf dem ersten schwebenden Fenster ein Touch-Bedienelement der ersten Ebene angezeigt wird und das Touch-Bedienelement der ersten Ebene dazu dient, ein Bedienelement darzustellen, das eine Bildschirmanzeigeform umschaltet;
das Empfangen einer ersten Split-Screen-Operation umfasst: Empfangen einer Operation des Benutzers auf dem Touch-Bedienelement der ersten Ebene durch das elektronische Gerät; Anzeigen eines Touch-Bedienelements der zweiten Ebene durch das elektronische Gerät, wobei das Touch-Bedienelement der zweiten Ebene ein Split-Screen-Bedienelement umfasst; und Empfangen einer Operation des Benutzers auf dem Split-Screen-Bedienelement durch das elektronische Gerät, wobei das Split-Screen-Bedienelement dazu dient, einen Anzeigebildschirm des elektronischen Geräts dazu zu veranlassen, Schnittstellen verschiedener Anwendungen in einer Vielzahl von Fenstern anzuzeigen.

10. Verfahren nach einem der Ansprüche 1 bis 9, wobei das gleichzeitige Anzeigen des ersten Split-Screen-Fensters und des zweiten Split-Screen-Fensters umfasst:
Anzeigen des ersten Split-Screen-Fensters und des zweiten Split-Screen-Fensters in einem Links-Rechts-Split-Screen-Anzeigemodus; oder
Anzeigen des ersten Split-Screen-Fensters und des zweiten Split-Screen-Fensters in einem Oben-Unten-Split-Screen-Anzeigemodus.

11. Verfahren nach einem der Ansprüche 1 bis 10, wobei
die schwebende Kugel (Floating Ball) unterstützt, vom Benutzer in einen anderen Bereich des Anzeigebildschirms gezogen zu werden; oder
die schwebende Kugel unterstützt, vom Benutzer ausgelöst zu werden, um zu dem schwebenden Fenster vergrößert zu werden; oder
die schwebende Kugel unterstützt, vom Benutzer ausgelöst zu werden, um geschlossen und nicht mehr angezeigt zu werden.

12. Verfahren nach einem der Ansprüche 1 bis 11, wobei die Leiste für empfohlene Anwendungen Symbole einer oder mehrerer Anwendungen umfasst, die vom Benutzer innerhalb eines kürzlichen Zeitraums üblicherweise verwendet wurden.

13. Elektronisches Gerät (900), umfassend einen Prozessor (910), wobei der Prozessor mit einem Speicher (921) gekoppelt ist und der Prozessor dazu konfiguriert ist, ein Computerprogramm oder in dem Speicher gespeicherte Anweisungen auszuführen, um das elektronische Gerät dazu zu befähigen, das Verfahren nach einem der Ansprüche 1 bis 12 zu implementieren.

14. Elektronisches Gerät nach Anspruch 13, wobei das elektronische Gerät einen faltbaren Bildschirm beinhaltet.

## Revendications

1. Procédé de recommandation d'application, comprenant :
l'affichage d'une interface de bureau, dans lequel une première fenêtre flottante et une seconde fenêtre flottante sont affichées sur le bureau, une interface d'une première application est affichée dans la première fenêtre flottante, et une interface d'une seconde application est affichée dans la seconde fenêtre flottante ;
la réception d'une première opération d'écran partagé dans la première fenêtre flottante ;
en réponse à la première opération d'écran partagé, la première fenêtre flottante est transformée en une première fenêtre d'écran partagé, et l'affichage simultané d'une première interface de recommandation d'écran partagé dans une seconde fenêtre d'écran partagé, dans lequel la première interface de recommandation d'écran partagé comprend une barre de recherche, une barre d'applications recommandées, et une barre d'applications prenant en charge le partage d'écran, la barre de recherche servant à rechercher une application prenant en charge le partage d'écran, la barre d'applications recommandées servant à montrer à un utilisateur une ou plusieurs applications recommandées pour un affichage en écran partagé, et la barre d'applications prenant en charge le partage d'écran servant à montrer tout ou partie des applications prenant en charge le partage d'écran dans un dispositif électronique ;
lors de l'affichage simultané de la première fenêtre d'écran partagé et de la seconde fenêtre d'écran partagé, l'affichage d'une bille flottante sur la seconde fenêtre d'écran partagé dans une zone proche d'un bord latéral de l'écran d'affichage, dans lequel la bille flottante est formée par la réduction de la seconde fenêtre flottante ;
après l'affichage de la première interface de recommandation d'écran partagé dans une seconde fenêtre d'écran partagé, le procédé comprenant en outre : la réception d'une première opération de sélection sur une icône d'une troisième application dans la première interface de recommandation d'écran partagé ;
en réponse à la première opération de sélection, une interface de la première application est affichée en continu dans la première fenêtre d'écran partagé, et la première interface de recommandation d'écran partagé est transformée en une interface de la troisième application dans la seconde fenêtre d'écran partagé ;
dans lequel, pendant le processus où la première interface de recommandation d'écran partagé est transformée en une interface de la troisième application dans la seconde fenêtre d'écran partagé, la bille flottante continue d'être affichée sur la première fenêtre d'écran partagé ou la seconde fenêtre d'écran partagé.

2. Procédé selon la revendication 1, dans lequel
l'icône d'une troisième application est affichée dans la barre d'applications recommandées ; ou,
l'icône d'une troisième application est affichée dans la barre d'une application prenant en charge le partage d'écran.

3. Procédé selon la revendication 1, dans lequel, après l'affichage de la première interface de recommandation d'écran partagé dans une seconde fenêtre d'écran partagé, le procédé comprend en outre :
lorsqu'un mot-clé d'une application est saisi dans la barre de recherche, une icône de l'application recherchée est affichée dans la première interface de recommandation en écran partagé ;
lorsque l'icône de l'application recherchée est touchée, la première interface de recommandation en écran partagé est remplacée par une interface de l'application recherchée dans la seconde fenêtre en écran partagé ;
dans lequel, pendant le processus de passage de la première interface de recommandation en écran partagé à une interface de l'application recherchée dans la seconde fenêtre en écran partagé, la bille flottante continue d'être affichée sur la première fenêtre en écran partagé ou sur la seconde fenêtre en écran partagé.

4. Procédé selon l'une quelconque des revendications 1 à 3, dans lequel le procédé comprend en outre :
la détermination de l'application dans la barre d'applications recommandées sur la base d'un paramètre de scénario correspondant à un premier scénario ; ou
la détermination de l'application dans une seconde barre d'applications recommandées sur la base d'un paramètre de scénario correspondant à un second scénario, dans lequel
le paramètre de scénario correspondant au premier scénario comprend au moins l'un des éléments suivants : informations d'emploi du temps, informations temporelles, informations de position et informations de réseau, et les informations d'emploi du temps sont des informations de réunion, des informations de billet d'avion, des informations de billet ou des informations d'hébergement.

5. Procédé selon la revendication 4, dans lequel la détermination de l'application dans la barre d'applications recommandées sur la base d'un paramètre de scénario correspondant au premier scénario comprend :
si l'heure du système se situe dans une période indiquée par les informations d'emploi du temps, et/ou si une position du dispositif électronique se situe dans une plage de position indiquée par les informations d'emploi du temps, la détermination, en tant qu'application recommandée en écran partagé, d'une application associée prédéfinie correspondant aux informations d'emploi du temps, dans lequel la barre d'applications recommandées comprend l'application recommandée en écran partagé.

6. Procédé selon la revendication 5, dans lequel le procédé comprend en outre :
l'obtention des informations d'emploi du temps sur la base d'informations de comportement de l'utilisateur stockées dans le dispositif électronique, et la détermination, sur la base des informations d'emploi du temps et d'une première relation de correspondance, de l'application associée prédéfinie correspondant aux informations d'emploi du temps, dans lequel la première relation de correspondance est une relation de correspondance pré-stockée dans le dispositif électronique et établie entre différentes informations d'emploi du temps et des applications associées prédéfinies, et l'application associée prédéfinie correspondant aux informations d'emploi du temps est une application de type réunion, une application de type voyage, une application de type trafic, une application de type déplacement, ou une application de type navigation ; ou
déterminer, sur la base des données de comportement historique de l'utilisateur ou des mégadonnées utilisateur, des informations de paire d'écran divisé prédéfinies correspondant au premier scénario, et déterminer, sur la base des informations de paire d'écran divisé prédéfinies correspondant au premier scénario, une application d'écran divisé recommandée correspondant au premier scénario.

7. Procédé selon la revendication 6, dans lequel la détermination, sur la base des données de comportement historique de l'utilisateur ou des mégadonnées utilisateur, des informations de paire d'écran divisé prédéfinies correspondant au premier scénario comprend :
si une fréquence de lancement successif de deux applications au cours d'une première période est supérieure ou égale à une fréquence prédéfinie, enregistrer des premières informations de paire d'écran divisé correspondant au premier scénario, dans lequel les premières informations de paire d'écran divisé comprennent une paire d'écran divisé comprenant les deux applications, et des informations concernant la première période ; et/ou
si une fréquence de lancement successif de deux applications au cours d'une première période et à l'intérieur d'une première plage de position est supérieure ou égale à une fréquence prédéfinie, enregistrer des premières informations de paire d'écran divisé correspondant au premier scénario, dans lequel les premières informations de paire d'écran divisé comprennent une paire d'écran divisé comprenant les deux applications, des informations concernant la première période et des premières informations de position ; et/ou
si la durée cumulée d'affichage de deux applications en mode écran divisé est supérieure ou égale à une durée prédéfinie, ou si une fréquence d'affichage de deux applications en mode écran divisé est supérieure ou égale à une première fréquence prédéfinie, enregistrer des premières informations de paire d'écran divisé correspondant au premier scénario, dans lequel les premières informations de paire d'écran divisé comprennent une paire d'écran divisé comprenant les deux applications ; et/ou
si une fréquence de basculement fréquent entre l'affichage de deux applications est supérieure ou égale à une seconde fréquence prédéfinie, enregistrer des premières informations de paire d'écran divisé correspondant au premier scénario, dans lequel les premières informations de paire d'écran divisé comprennent une paire d'écran divisé comprenant les deux applications.

8. Procédé selon l'une quelconque des revendications 1 à 7, dans lequel le procédé comprend en outre :
déterminer M applications d'écran divisé recommandées selon une première règle de recommandation ;
déterminer N applications d'écran divisé recommandées selon une seconde règle de recommandation ; et
afficher séquentiellement les M applications d'écran divisé recommandées et les N applications d'écran divisé recommandées dans la barre d'applications recommandées par ordre décroissant de priorité, dans lequel
une priorité de la première règle de recommandation est supérieure à une priorité de la seconde règle de recommandation.

9. Procédé selon l'une quelconque des revendications 1 à 8, dans lequel une commande tactile de premier niveau est affichée sur la première fenêtre flottante, et la commande tactile de premier niveau sert à représenter une commande qui commute une forme d'affichage d'écran ;
la réception d'une première opération d'écran partagé comprend : la réception, par le dispositif électronique, d'une opération de l'utilisateur sur la commande tactile de premier niveau ; l'affichage, par le dispositif électronique, d'une commande tactile de second niveau, dans lequel la commande tactile de second niveau comprend une commande d'écran partagé ; et la réception, par le dispositif électronique, d'une opération de l'utilisateur sur la commande d'écran partagé, dans lequel la commande d'écran partagé sert à déclencher un écran d'affichage du dispositif électronique pour afficher des interfaces de différentes applications dans une pluralité de fenêtres.

10. Procédé selon l'une quelconque des revendications 1 à 9, dans lequel l'affichage simultané de la première fenêtre d'écran partagé et de la seconde fenêtre d'écran partagé comprend :
l'affichage de la première fenêtre d'écran partagé et de la seconde fenêtre d'écran partagé selon un mode d'affichage en écran partagé gauche-droite ; ou
l'affichage de la première fenêtre d'écran partagé et de la seconde fenêtre d'écran partagé selon un mode d'affichage en écran partagé haut-bas.

11. Procédé selon l'une quelconque des revendications 1 à 10, dans lequel
la boule flottante prend en charge le fait d'être glissée par l'utilisateur vers une autre zone de l'écran d'affichage ; ou
la boule flottante prend en charge le fait d'être déclenchée par l'utilisateur pour être agrandie en la fenêtre flottante ; ou
la boule flottante prend en charge le fait d'être déclenchée par l'utilisateur pour être fermée et ne plus être affichée.

12. Procédé selon l'une quelconque des revendications 1 à 11, dans lequel la barre d'applications recommandées comprend des icônes d'une ou plusieurs applications habituellement utilisées par l'utilisateur au cours d'une période de temps récente.

13. Dispositif électronique (900), comprenant un processeur (910), dans lequel le processeur est couplé à une mémoire (921), et le processeur est configuré pour exécuter un programme informatique ou des instructions stockées dans la mémoire, pour permettre au dispositif électronique de mettre en œuvre le procédé selon l'une quelconque des revendications 1 à 12.

14. Dispositif électronique selon la revendication 13, dans lequel le dispositif électronique inclut un écran pliable.
